(19) Europäisches Patentamt
European Patent Office
Office européen des brevets

(11) EP 2 823 294 B1

(12) EUROPEAN PATENT SPECIFICATION

(45) Date of publication and mention of the grant of the patent:
**18.05.2016 Bulletin 2016/20**

(21) Application number: **12791829.0**

(22) Date of filing: **06.03.2012**

(51) Int Cl.:
***G01N 27/414*** ***(2006.01)*** ***G01N 27/416*** ***(2006.01)***

(86) International application number:
**PCT/GB2012/050494**

(87) International publication number:
**WO 2013/132202 (12.09.2013 Gazette 2013/37)**

# (54) METHOD AND APPRATUS FOR MEASURING CHEMICAL ION CONCENTRATION USING A FEEDBACK-CONTROLLED TITRATOR

VERFAHREN UND VORRICHTUNG ZUR MESSUNG VON CHEMISCHER IONENKONZENTRATION UNTER VERWENDUNG EINER FEEDBACKGESTEUERTEN TITRIERVORRICHTUNG

PROCÉDÉ ET APPAREIL PERMETTANT DE MESURER LA CONCENTRATION D'IONS CHIMIQUES AU MOYEN D'UN TITRATEUR CONTRÔLÉ PAR RÉTROACTION

(84) Designated Contracting States:
**AL AT BE BG CH CY CZ DE DK EE ES FI FR GR HR HU IE IS IT LI LT LU LV MC MK MT NL NO PL PT RO RS SE SI SK SM TR**

(43) Date of publication of application:
**14.01.2015 Bulletin 2015/03**

(73) Proprietor: **DNA Electronics Ltd**
**London W12 7SB (GB)**

(72) Inventors:
- **TOUMAZOU, Christofer**
  **London W12 7SB, (GB)**
- **LIU, Yan**
  **London W12 7SB, (GB)**

(74) Representative: **Lind, Robert**
**Marks & Clerk LLP**
**Fletcher House**
**Heatley Road**
**The Oxford Science Park**
**Oxford OX4 4GE (GB)**

(56) References cited:
**US-A1- 2010 255 595**

- **BART H. VAN DER SCHOOT ET AL: "The pH-static enzyme sensor: An ISFET-based enzyme sensor, insensitive to the buffer capacity of the sample", ANALYTICA CHIMICA ACTA, vol. 199, 1 January 1987 (1987-01-01), pages 157-160, XP055049931, ISSN: 0003-2670, DOI: 10.1016/S0003-2670(00)82807-X**
- **VAN DER SCHOOT B H ET AL: "The pH-static enzyme sensor: Design of the pH control system", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, SWITZERLAND, vol. 1, no. 1-6, 1 January 1990 (1990-01-01), pages 546-549, XP027419771, ISSN: 0925-4005 [retrieved on 1990-01-01]**
- **VAN DER SCHOOT B ET AL: "An ISFET-based microlitre titrator: integration of a chemical sensor-actuator system", SENSORS AND ACTUATORS, ELSEVIER, SWITZERLAND, vol. 8, no. 1, 1 September 1985 (1985-09-01), pages 11-22, XP026555589, ISSN: 0250-6874, DOI: 10.1016/0250-6874(85)80020-2 [retrieved on 1985-09-01]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 823 294 B1

## Description

FIELD OF THE INVENTION

The present invention is related to a method and device for measuring chemical ion concentration. In particular the present invention may be used to remove noise from a signal output from a chemical sensor such as an ion sensitive field effect transistor (ISFET).

BACKGROUND

In any chemical measurement systems, the chemical noise, such as thermal noise, site bonding and dissociation are dominant over the electrical noise in interfacing circuits. Moreover, these noises usually spread in all frequency spectrum or overlap with the signal spectrum. Therefore they cannot be removed by following circuit techniques, such as filters. With an ISFET pH measurement system, chemical noise due to Brownian motion and drift, which is a flicker noise in spectrum, significantly degrades the measurement accuracy, as the drift and thermal noise overlap with the slow changing pH signal.

Therefore, in order to enhance the measurement accuracy, one has to boost the signal to noise ratio by either enhancing the signal magnitude or using a feedback system to minimize noise within the open loop. However, due the speed and sizing requirement in the state of the art Lab-on-Chip technique, signal magnitude is constrained by the system scale. Moreover in real-time detection systems, it is unrealistic to control the volume of target samples.

Additionally, it is preferable that the chemical environment is stably maintained. This is because the chemical agent may need a particular chemical condition to keep active and because measurement accuracy also depends on environmental constants, such as pH.

For these reasons, a detection system with noise reduction capability is desirable in chemical measurement systems, especially in real-time or portable devices. In order to reduce the in-loop chemical noise mainly introduced by the interface of the electrolyte-solid surface, the inventors have developed a feedback system similar to a sigma-delta modulation in data conversion of electrical systems.

Bart H. Van Der Schoot et al: "The pH-static enzyme sensor: An ISFET-based enzyme sensor, insensitive to the buffer capacity of the sample", Analytica Chimica Acta, vol. 199, 1 January 1987, pages 157-160, describes a pHstatic enzyme sensor according to which the pH is maintained at a constant level.

Summary of the invention

According to a first aspect of the invention there is provided a method of measuring ion production within a sample fluid due to a chemical reaction, the method relying upon sigma delta modulation. The method comprises the steps of exposing a chemical sensor to the sample to provide an electrical output signal representing an ion concentration within the sample, calculating, from said electrical output signal, a delta feedback value representing a change rate of ion concentration of the sample, providing the delta feedback value to a titrator exposed to the sample to release or absorb a quantity of ions to the sample fluid, whereby the sample fluid contains a sigma result, and deriving an ion production result from said electrical output signal.

The step of deriving an ion concentration result from said electrical output signal may involve deriving the result directly or indirectly from the electrical output signal.

According to a second aspect of the invention there is provided a device for measuring ion production within a sample fluid due to a chemical reaction and which is configured to use sigma delta modulation. The device comprises a chemical sensor and chemical titrator exposed to the sample, wherein an electrical output signal from the chemical sensor representing an ion concentration within the sample is coupled to the titrator with feedback means, the feedback means being arranged to calculate a delta feedback value representing a change rate of ion concentration of the sample, and provide said delta feedback value to said titrator, wherein, in use, the sample fluid contains a sigma result.

Further preferred aspects are set out in the dependent claims.

Brief Description Of The Drawings

Specific embodiments of the invention will now be described by way of example only with reference to the accompanying figures:

Figure 1 is a control diagram of a system embodying the invention;

Figure 2 is a control diagram of a PWM controller for a titrator;

Figure 3 is a control diagram of a Sigma-Delta modulator;

Figure 4 is a graph of a noise transfer function;

Figure 5 shows the output noise distribution for a system with white noise input in an (a) open loop system and a (b) modulated system;

Figure 6 shows the output signal for a system with white noise input in an (a) open loop system and a (b) modulated system;

Figure 7 shows the output noise distribution for a system using a drift model in an (a) open loop system and a (b) modulated system;

Figure 8 the output signal for a system using a drift model;

Figure 9 shows a comparison between traditional electronic and chemical Sigma-Delta modulators;

Figure 10 is an illustration of a titrator and associated chemical reaction;

Figure 11 is a graph showing the simulated dynamic response of chemical concentration change;

Figure 12 shows the measured pH response corresponding to a step hydrogen ion change.

Figure 13 is a control diagram of a preferred system;

Figure 14 is a graph of simulated sigma-delta modulated (SDM) results and open-loop measurement results with constant reaction rate as input;

Figure 15 is a micro photograph of substrate with sensors and integrated micro-titrator;

Figure 16 is a graph of a titration control scheme using PWM constant potential output;

Figure 17 is a circuit diagram of a preferred system;

Figure 18 is a graph of measurement results with no pH change for both open loop and closed loop measurements;

Figure 19 is a graph Fast Fourier Transfer results of drift measurement;

Figure 20 is a graph of measured signals for both a compensated and an uncompensated system; and

Figure 21 is a graph of measured results for charge concentration and ion change.

DETAILED DESCRIPTION

In a system comprising the invention, there is a fluid having a chemical concentration of interest, a sensor to detect the chemical, a control system and a feedback mechanism for changing the chemical concentration of the fluid. The control system provides a noise shaping filter to ensure that variations in concentration occur at high frequencies instead of lower frequencies.

In a preferred embodiment of the system, the fluid is contained within a microfluidic device and an ion concentration is sensed by an ISFET to produce an electrical output signal. The control system processes the signal, compares the signal to a setpoint to calculate an error signal, and converts the error signal to a quantity of charge. The charge is provided to a titrator which feeds back this charge as an ion flux into the chemical environment to correct the error. A PWM (pulse width modulation) processor is used to operate the titrator and minimize the leakage. A potentialstat is used to maintain the stability of the electrolyte potential.

System structure

An overall control system of a preferred embodiment is shown in Fig 1 comprising:

- Detection system: ISFET-based chemical detection system with interface/readout circuit.
- Processing system: an embedded control system to convert the ISFET output into a charge
- processing and pH to charge conversion. A pH control system is embedded to provide a stable chemical environment
- Titrator: A coulometric titrator with PWM control scheme to convert electrical charge into Hydrogen ion released into the chemical environment.
- Potentiostat: an electrode system to maintain the potential of the measurement environment.
- Low pass filter: Normally a decimation filter, to attenuate high frequency noised induced by this system.
- Measurement environment: the chemical environment where the reaction occurs and to which the ISFET is exposed.

The detection system uses an ISFET sensor with a conventional source drain follower circuit. The sensor's threshold voltage is modulated by the concentration of hydrogen ions. The source drain follower biases the transistor and monitors the source as the output.

In Figure 1, the ion concentration result is obtained from the output of the low pass filter. However, it will be appreciated that the result may be obtained from signals present at other points in the system, for example directly from the output of the ISFET or from a point in the feedback loop.

The pH processing system includes pH-to-charge conversion and pH control. This system calculates the amount of charge need to attain a preset pH value from the measured pH results. This conversion is calculated by an integrated circuit or an external PC or electronic controller, according to known chemical diffusion coefficients and the reaction chamber volume.

The titrator system may comprise: a noble metal electrode such as platinum, which generates hydrogen ions by providing a charge to the electrolyte; a counter electrode, which is part of the potentiostat, to balance the charge in a testing environment and generate OH (hydroxide); and a Sigma Delta PWM controller to switch the titrator between 3 levels, in order to minimize the error, reduce the leakage and realize on-chip operation.

In a preferred embodiment a potentiostat is used to counterbalance the potential change due to the titrator voltage and modulate the electrolyte voltage potential by an externally set value. It consists of three electrodes, a working electrode, a counter electrode and a reference electrode.

A low pass filter before the measurement output of this system attenuates high frequency noise introduced by the PWM controller and oversampling. This may be a digital decimation filter or analogue low pass filter.

The measurement environment is where a chemical reaction may occur, producing a given type of ions, which ions are detected by the chemical sensor. This environment is typically a microfluidic chamber or well provided to the sensor surface. The ionic charge generated by both the chemical reaction and titrator will be integrated into an ionic concentration that is measured by the sensor.

The total charge needed to maintain a constant pH value is given by:

$$C_{in} = (pH_{set} - pH_{measured}) \times V + C_D \qquad (1)$$

Where Cin is the input charge required for feedback, $pH_{set}$ is the preset target pH value, and $pH_{measured}$ is the pH value measured by the ISFETs, V is the effective volume and $C_D$ is the correction due to the diffusion effect.

PWM control of titrator

The PWM control scheme is realized by a sigma-delta modulator as well, as illustrated in Figure 2. The current passing through the titrator electrode is measured and integrated as the total charge injected into the chemical system. This amount is compared with the required charge calculated by the pH-charge conversion system. The result of the comparison will determine the potential level of the titrator. Therefore the titrator potential will be set to the maximum supply voltage when the required charge is positive, and to the minimum supply voltage of supply when the required charge is negative.

Sigma-Delta modulation

Figure 3 shows a Sigma-Delta modulation system structure. The measurements results are fed back using negative feedback, an integrator accumulates the difference of the input and feedback output.

Considering a sample-based modulator, we have:

$$O(n) = I(n-1) + n(n) - n(n-1) \quad (2)$$

Where *O(n)* is the output of the current state, *I*(*n* -1) is the input of last state, *n(n)* is the noise of current state. It indicates that the noise has been differentiated without any reduction of input. Thereby, the signal to noise ratio is enhanced.

In a chemical measurement system, noise is added to the chemical environment. By using a feedback system, the chemical noise added in the open loop can be differentiated.

The diffusion of hydrogen ions is replaced by an integrator, according to:

$$C_R(0,t) = (\pi D_R)^{-1/2} \int_0^t f(\tau)(t-\tau)^{-1/2} d\tau \quad (3)$$

In preferred embodiments the measurement sample frequency is 1k Hz, and the PWM frequency at 100k Hz.

Figure 4 shows the transfer function of noise in this detection system, it shows that by using this system, low frequency noise can be attenuated dramatically.

Figure 5 and 6 show the system output with white noise added in an open loop system (top) versus a closed loop embodiment (bottom). It shows that the output noise level is reduced by one order of magnitude.

Figure 7 and 8 show the system output with signal drift added in the open loop (top). The drift effect is cancelled out by the feedback (bottom), due to attenuation of the low frequency component. The drift which was 0.05mV for 8000 seconds was almost removed and the output only contains random noise. After each control interval, the difference between a setpoint (in terms of pH or voltage signal) and the chemical sensor output is fed back to the electrolyte via the titrator, which compensates the system for the slow drift noise.

Features of preferred embodiments:

1. Close loop detection:

Detection is completed by a sensing-modulating system, rather than conventional open-loop measurement. Chemical signals are sensed and fed back into the chemical environment to modulate the measurement, in order to get accurate results.

2. Sigma delta modulation of chemical system

Due to the feedback titrator and transfer function of the electrolyte, the signal is integrated over the entire system, and any noise added in the open-loop measurement system becomes differentiated. This function is completed by a Sigma-Delta modulation.

3. Hybrid feedback system

Normal feedback systems in chemical measurement system only deal with the electrical signal. In the present system , the electrical signal will be transformed into a chemical variable and part of the feedback system. In this case, the diffusion and accumulation effect of chemical ions, acts as a low pass filter or integrator to attenuate the noise.

Further details of preferred embodiments and results are as follows.

The proposed chemical SDM has a similar structure to a conventional electronic SDM: the ideal electronic integrator or the in-loop low pass filter (LPF) is replaced by the chemical integrator, which is essentially the intrinsic chemical transfer function due to ion diffusion and accumulation; the electronic negative feedback is realized by a titrator; the digital quantizer is replaced by the chemical sensors, e.g. ISFETs. Therefore the Delta modulator (differentiator) is established by the feedback of the chemical ions and the Sigma modulator is established by the ion concentration profile.

Considering a simple first order modulator with constant chemical ion input, we can have the chemical output

concentration given by:

$$\sum_{1}^{n} C(n) = -n\alpha \log_{10} J + \sum_{1}^{n} D[n] - D[n-1] = -\alpha \log_{10} J^{n} + D[n] - D[0] \quad (4)$$

Where the J is the input ion flux replacing the electronic voltage input, the D is the chemical noise replacing the quantization or electronic noise, n is the sampling index.

There are two benefits from this implementation shown in Eq. (4): the signal is boosted by oversampling. In fact due to the intrinsic of chemical property, it provides extra boost for the pH measurement. The pH change summation provides a multiply effect for the total ion concentration change; second, the noise shaping can be simply achieved by oversampling the chemical signal. This system realizes a LPF for pH change and HPF (High Pass Filter) for drift and circuitry noise. The chemical reaction is essentially a slow-changing signal, while the in-band noise is mainly the chemical drift, therefore, with oversampling, the drift will be differentiated without attenuating the chemical signal.

It also should be noted that compared to conventional open-loop measurement, the chemical change rate per sample is measured rather than the absolute pH value across entire measurement. Instead of a two point measurement, this system can track the reaction rate with minimized low frequency noise. This also provides the other benefit for experiments starting from pH 7, because in either high or low pH environment, a constant ion change will give smaller pH variation, which might not be detectable from an openloop measurement with high noise level.

B. Continuous titration feedback The negative feedback of a chemical signal is realized by a titration system. The titrator for ISFETs has been used for open-loop determination of pH value by constant current biasing, where the elapsed time was recorded as the indication of titration. However, to achieve dynamic feedback control, a charge based titration is required to delivery designated amount of ions to the chemical environment during each titration time windows. Figure 10 illustrates the three electrodes system with an adjustable charge source delivering the required ions. The feedback hydrogen or hydroxyl ions is generated by the titrator electrode (i.e. working electrode(WE)), while the hydroxyl or hydrogen ions are generated at the counter electrode (CE) to maintain the charge equilibrium. Therefore, this dynamic system has negligible effect in the bulk concentration of ion. The reference electrode provides constant potential in the electrolyte, which is essential for the biasing of chemical sensors.

C. Chemical integrator.

The core part of the proposed system is the realization of a chemical integrator for hydrogen ions. By examining the diffusion and titration mechanism of chemical environment, the integration can be obtained from intrinsic ion diffusion/accumulation behaviour. Considering only the diffusion effect, the concentration change at origin where the ion flux initiates can be derived as:

$$C_{R}(0,t) = (\pi D_{R})^{-1/2} \int_{0}^{t} f(\tau)(t-\tau)^{-1/2} d\tau \quad (5)$$

where the DR is the diffusion coefficient of ion, the f(τ) is the constant flux generated either by external bulk environment or by titration. What we can find is that the chemical ion diffusion itself provides an intrinsic " chemical integrator". Alternatively, to further model the chemical interface, we assume that the concentration distribution is consistent along the radial direction, we can have a one-dimension 2nd order ficsher's law by a single dimension partial derivative equation, given by:

$$\frac{\partial C}{\partial t} = D\frac{1}{r^{2}}\left(2r\frac{\partial C}{\partial r} + r^{2}\frac{\partial^{2} C}{\partial r^{2}}\right) + \frac{zFD}{RT}\left[\frac{\partial C}{\partial r}\frac{\partial \varphi}{\partial r} + C\left(\frac{2}{r}\frac{\partial \varphi}{\partial r} + \frac{\partial^{2} \varphi}{\partial r^{2}}\right)\right] \quad (6)$$

Where the r stands for the radius scale and ' is the electric filed.

We used the MATLAB ODE tool box to solve this equation by using a constant titration current (chemical flux), shown in Fig. 11 with X as the distance from origin, Y as the elapsed time, Z as the concentration value, we can find

that the chemical concentration increase almost linearly according to a step signal. This behaviour demonstrates the existence of an integrator-like behaviour in chemical interface.

The step and pulse response of this chemical integrator are further proved by the measurement on a chemical sensor with specific titration input, shown in Fig. 12. A CMOS ISFET is used as the pH sensor, while the deposited gold electrode generates the chemical input with a step signal. With a 1 uA constant current step signal , the pH decreased from pH 6.9 to 6.4 corresponding to hydrogen ion concentration change form 1.05e-7 M/L to 1.4e-7M/L. It can be found that the measured step response of this system shows an integrator-like behaviour with a small offset. It should be noticed that the Faradic impedance is not negligible. Considering a current step signal of 1 uA, the Faradic impedance will introduce 5mV potential rise, which can cause an error of the ISFETs output. This requires a compensation scheme or extra measurement configuration to minimize this effect, which will be detailed below.

D. System modelling and simulation.

The entire system is shown in Fig. 13. This hybrid system has both the chemical and an electronic part as the active components, i.e. Sigma and Delta Modulators. A reference biasing or potentiostat is required to maintain constant biasing for the ISFET. This system is modelled in SIMULINK and simulated using constant step change signal (1e-10M/L per second) as the input. A drift/low frequency noise is introduced from the model to mimic the real measurement environment. Both open-loop and SDM based measurement results are simulated with a 10mV/Hr drift. The sampling rate for the open loop signal is 1 Hz, the SDM operates at 0.01 Hz. Both output from the transducer are fed into a 4th order low pass IIR filter to attenuate high frequency noise.

Figure 14 shows the simulated results of both an open-loop and an SDM system: the line with diamonds indicates the ideal pH change caused by hydrogen ion change (dotted lines), the line with circles is the results from open loop measurement, and the solid line is the SDM results. What we find in open loop measurement is that the drift can be equivalent to the chemical input signal, providing a negative signal to noise ratio. It should be noticed that although the drift in simulation seems predictable, the drift is found to be varying within 10mV range depending on the chemical concentration, sensor property and experimental environment, and the real SNR is not fully predictable. Therefore, the open loop measured results can hardly provide any useful information.

For closed loop measurement, the input signal is tracked by a stepped output response, which corresponds to each ion change step. Since the SDM operates at a low sample rate, the chemical signal is boosted from 0.0005 pH/step to 0.05 pH step, this can be further enhanced by lowering the sampling rate. Moreover the drift and low frequency noise, which is dominant in the open-loop measurement, are differentiated, providing a significant increase of SNR. Although residual noise or spikes in high spectrum cannot be fully attenuated, it has a minimized effect on the low frequency chemical signal.

The measurement and feedback is repeated at regular intervals. For many systems and reactions to be monitored an interval on the order of a few seconds is sufficient and allows averaging of measurements and titrations. The interval is preferably less than 20 seconds, less than 10 seconds, or less than 6 seconds.

III. SYSTEM IMPLEMENTATION

A system embodying the invention is implemented using ISFETs and an external read-out and processing circuitry. Furthermore, to minimize non-ideal effects such as the potential induced by the Faradaic impedance, some extra processing steps and circuit implementations have been designed, which are detailed below.

A. Sensor and titrator

To demonstrate the proposed system, both custom-made and CMOS ISFETs devices were used as the chemical transducer The custom-made Sentron ISFETs typically drift around 1-2mV/hr, while CMOS-based ISFETs have a drift on the order of 10mV/hr.

Two integrated titrators with deposited gold and discrete platinum electrodes were used in the following experiments, with a maximum titration current of 100uA. Figure 15 illustrates the CMOS ISFETs with an integrated gold titrator. It should be noted that only the middle ISFET in Figure 15 was used as the measured device to provide stable feedback response.

B. Titration control

In order to deliver a specific amount of ions into the electrolyte within a short time window, the titrator should be driven by a controlled current source, however, with a varying potential due to electrolyte interface change. This is not realistic in some electric field sensitive measurements, moreover the extra potential drop induced by current pulses

can introduce measurement error, which could cause system instability. Therefore, a PWM based charge delivery system may be used as shown in Figure 16.

A constant voltage source (Vout) biases the pair of working/ counter electrodes in a designated polarity; the current flowing through the working electrodes is measured and integrated to provide the total charge within a certain period. For each sampling-feedback period, there is a titration stage and the idle stage. In the idle stage, all the electrodes are set to either ground or floating, to establish a constant electrolyte potential. After a certain settling time, the ISFETs readings are taken, and the feedback charge is calculated as the reference for the next stage (line with diamonds) based on the initial output level of the chemical sensor. The titration stage is divided into small fragments, in each fragment, the voltage on the WE or CE are biased with the voltage source, depending on whether hydrogen ions or hydroxyl ions are required on the sensing site. The voltages on both WE or CE are kept constant until the target amount of charge is achieved. This configuration makes sure that the feedback charge can be delivered, while the potential induced by titration voltage has negligible influence on the sensor biasing and sampling.

C. Instrumentation

The measurement and feedback circuitry is illustrated in Figure 17. The ISFETs are biased using a source-drain follower, with a grounded reference electrode providing a constant remote gate voltage. Therefore, the chemically-induced potential will modulate the actual gate voltage, and the source voltage will track this change by maintaining a constant VGS .

The charge measurement is composed of the current sensing circuitry and integrator. The current flowing through the WE and CE induces the voltage change in the sensing resistor, which is amplified by the instrumentation amplifier. The integrator calculates the total charge delivery during each period.

The feedback control and charge calculation is realized in a external Labview system. The measured results are fed through a 3rd order IIR LPF to attenuate the thermal and PWM noise in broad band. The filtered results are converted to charge change, providing the feedback. The feedback charge is compared to the measured titration charge during the titration stage, an off signal is generated when the comparator changes the sign.

IV. EXPERIMENT RESULTS

To prove the noise shaping function of the proposed system and simplify the measurement, we designed two types of experiments, the zero-input, and constant input. All the experiments are performed in an enclosed Faraday cage shielding environmental noise, and the temperature of electrolyte is kept at 27oC. To make a consistent measurement and attenuation effect, we kept the sampling frequency at 0.2 Hz while the PWM frequency was at 100Hz. The offset of the instrumentation system was measured and removed from the following experiments to minimize measurement mismatch

A. Zero input

In zero input experiments, the ion concentration, i.e. the pH of the electrolyte, was kept constant. A 1 mM/L KCI with 100M/L phosphate buffer is used as the electrolyte, giving a constant pH of 6.7. The measured results of the CMOS ISFETs are shown in Figure 18, with a identical sensor as a reference. A large drift can be found for uncompensated sensors in the range of 30-60mV/hr. The compensated sensors with feedback control shows a constant output with spike-like noise due to potential change induced by the switch and PWM control, which is consistent with modelling. The drift value of the proposed system in zero input experiments shows a consistent value of 0.1 mV/hr across more than 10 experiments.

The frequency spectrum of measured results was obtained by performing FFT on time domain data, as shown in Figure 19. The measured ISFETs noise power within the bandwidth are in the order of 10 3V= p Hz, exhibiting a 1/f pattern . Due to sensor variation and experimental setup, the noise power can vary in a wide range (ref 1 and ref 2), which give a unpredictable drift around tens of milivolts. For the SDM results, the low frequency noise power is dramatically attenuated with a integrated noise power in order of 1 e-5 V= p Hz and also exhibits a first order noise shaping as simulated, shown by the dashed line in Figure 19.

B. Chemical reaction

To generate a constant input signal for the SDM, we used the following simple reaction to mimic a step input:

$$H_2O + CO_2 \rightleftarrows H^+ + HCO_3^- \quad (7)$$

The reaction rate can be controlled by the phosphate buffer or magnesium ion concentration in an alkaline environment. We first perform several reference tests using conventional pH probe. The pH change rate is found to be varying from 2pH/hr to 0.2pH/hr with different amount of phosphate buffer and KCl. Therefore, in order to generate different input signal, different concentrations of phosphate buffer were used from 0.1 M/L to 100M/L and magnesium ion concentration varying from 1uM/L to 100uM/L.

During the tests, the designated chemical compound were added to the electrolyte, which after stirring settled down to an initial pH measured by the METTLER TOLEDO pH probe. After that, the continuous control of electrodes and measurement sensors were taken. After pH readings from the reference sensor dropped below pH8, the measurement was stopped and an end-point pH was measurement using the same pH probe. After each experiment, the pH measured from the pH probe was compared to the reference test without any sensors to validate a constant pH change. An example of measurement results without settled down/stirring period is shown in Figure 20.

It clearly shows that when there was a pH change, the proposed sensing scheme tracks the pH change, and generates a constant voltage output corresponding to the constant ion-change rate. It should be noted that there was a slight drop in the final stage measurement, which further proves that the ion change per sample is what has been measured rather than the pH change, since the constant pH change is equivalent to a exponential change in charge concentration. Compared to the reference sensor, the measurement results of SDM sensors exhibit a drift of low magnitude, when in open loop measurement, the drift follows an exponential characteristic, ranging about several millivolts.

Different experiments with various ion change rate have been performed. The charge change rates are integrated to provide total charge change, which are compared to the calculated results from the concentration change measured by the pH probe. These pH change values are also verified by the preliminary measurement without sensors. The results are shown in Figure 21, with X as the calculated charge change and Y is the measured results. The measurement error calculated is in the range of 15%. Possible reasons for this error are due to instrumentation circuitry mismatch, ion diffusion errors and localized concentration difference. However, taking the reference sensor in Figure 20 for example, a total pH change of 0.25 will induce 0.012V in the sensor output. This will give maximum SNR in one hour ranging from 10.8dB to 3.8dB for Sentron ISFETs, from 3dB to - 2dB for CMOS ISFETs, while the proposed measurement system can keep this value at at least 8dB depending on the measurement results, and further boost it with oversampling. Moreover, it is important to emphasise that the signal to noise ratio calculated for the open loop system assumes a predefined drift pattern calculated based on averaging experiential results, therefore, providing a long-term slow changing chemical signal. It is difficult to define the real signal to noise ratio, and detect any chemical change smaller than average drift value. It also should be noted that the instrumentation circuitry mismatch can be reduced further by using a chopper amplifier. Also these errors are more predictable compared to the chemical drift and can be subtracted easily using post-processing.

## Claims

**1.** A method of measuring ion production within a sample fluid due to a chemical reaction, the method relying upon sigma delta modulation and comprising the steps of:

exposing a chemical sensor to the sample to provide an electrical output signal representing an ion concentration within the sample;
calculating, from said electrical output signal, a delta feedback value representing a change rate of ion concentration of the sample ;
providing the delta feedback value to a titrator exposed to the sample to release or absorb a quantity of ions to the sample fluid, whereby the sigma modulator is established by the ion concentration profile of the sample fluid; and
deriving an ion production result from said electrical output signal.

**2.** A method according to claim 1, wherein the steps of the method are repeated at regular intervals, said intervals preferably being less than 20 seconds, less than 10 seconds or less than 6 seconds.

**3.** A method according to claim 1 or 2, wherein the quantity of ions to be released or absorbed is calculated to maintain

a substantially constant concentration of said ions.

**4.** A method according to claim 1, 2 or 3, wherein the sample experiences a reaction which releases or absorbs said ion.

**5.** A method according to any of claims 1 to 4, further comprising providing a pH measurement signal coupled to the chemical sensor, preferably via a low pass filter.

**6.** A method according to any one of the preceding claims, wherein the step of calculating a feedback value comprises oversampling the electrical output signal representing an ion concentration in order to provide noise-shaping.

**7.** A device for measuring ion production within a sample fluid due to a chemical reaction and which is configured to use sigma delta modulation, the device comprising a chemical sensor and chemical titrator exposed to the sample, wherein an electrical output signal from the Chemical sensor representing an ion concentration within the sample is coupled to the titrator with feedback means, the feedback means being arranged to calculate a delta feedback value representing a change rate of ion concentration of the sample, and provide said delta feedback value to said titrator, wherein, in use, the sample fluid contains a sigma result.

**8.** A device according to claim 7, further comprising a reference electrode exposed to the sample fluid.

**9.** A device according to claim 7 or 8, wherein said chemical titrator comprises a noble metal, preferably platinum, gold or silver.

**10.** A device according to any of claims 7 to 9, wherein the feedback means comprises a filter, preferably a low pass filter.

**11.** A device according to any of claims 7 to 10, further comprising a Pulse Width Modulation (PVVM) controller coupled to the titrator, the controller receiving the delta feedback value as a signal to be modulated.

**12.** A device according to claim 11, wherein said PWM controller operates in delta mode to titrate the required quantity of ions.

**13.** A device according to any of claims 7 to 12, further comprising means to calculate the total charge provided to the titrator

**14.** A device according to any of claims 7 to 13, wherein the chemical sensor is an ion sensitive field effect transistor.

**Patentansprüche**

**1.** Verfahren, um die Ionenproduktion innerhalb einer Probenfluid zu messen, die infolge einer chemischen Reaktion eintritt, wobei das Verfahren auf eine Sigma-Delta-Modulation gestützt ist und die folgenden Schritte umfasst:

Aussetzen eines chemischen Sensors gegenüber der Probe, um ein elektrisches Ausgangssignal bereitzustellen, welches eine Ionenkonzentration in der Probe repräsentiert;
Berechnen eines Delta-Rückmeldungswerts aus besagtem elektrischen Ausgangssignal, welcher eine Änderungsrate der Ionenkonzentration der Probe repräsentiert;
Bereitstellen des Delta-Rückmeldungswerts an einen der Probe ausgesetzten Titrator, um eine Menge von Ionen im Probenfluid freizusetzen oder zu absorbieren, wobei der Sigma-Modulator durch das Ionenkonzentrationsprofil des Probenfluids etabliert wird, und
Herleiten eines Ionenproduktionsergebnisses vom elektrischen Ausgangssignal.

**2.** Verfahren nach Anspruch 1, wobei die Verfahrensschritte in regelmäßigen Abständen wiederholt werden, wobei die besagten Intervalle vorzugsweise weniger als 20 Sekunden, weniger als 10 Sekunden oder weniger als 6 Sekunden betragen.

**3.** Verfahren nach Anspruch 1 oder 2, wobei die Menge an Ionen, die freigesetzt oder absorbiert werden sollen, so kalkuliert wird, dass eine im Wesentlichen konstante Konzentration der Ionen beibehalten wird.

**4.** Verfahren nach Anspruch 1, 2 oder 3, wobei die Probe eine Reaktion durchläuft, welche die besagten Ionen freisetzt

oder absorbiert.

5. Verfahren nach einem der Ansprüche 1 bis 4, welche zusätzlich das Bereitstellen eines pH-Messsignals umfasst, welches an den chemischen Sensor, vorzugsweise über einen Tiefpassfilter, gekoppelt ist.

6. Verfahren nach einem der vorhergehenden Ansprüche, wobei der Schritt für eine Berechnung des Rückmeldungswerts eine überabtastung des elektrischen Ausgangssignals umfasst, welches eine Ionenkonzentration repräsentiert, um eine Rauschformung bereitzustellen.

7. Gerät zur Messung einer Ionenproduktion in einem Probenfluid, welche infolge einer chemischen Reaktion eintritt, und das konfiguriert ist, eine Sigma-Delta-Modulation zu verwenden, wobei das Gerät einen chemischen Sensor und einen chemischen Titrator, welcher der Probe gegenüber ausgesetzt wird, umfasst, wobei ein elektrisches Ausgangssignal vom chemischen Sensor, welches eine Ionenkonzentration in der Probe repräsentiert, mit dem Titrator mittels eines Rückmeldungsmittels gekoppelt wird, wobei das Rückmeldungsmittel angeordnet ist, um einen Delta-Rückmeldungswert zu berechnen, welcher eine Änderungsrate der Ionenkonzentration der Probe repräsentiert, und den besagten Delta-Rückmeldungswert dem besagten Titrator bereitzustellen, wobei, bei Verwendung, das Probenfluid ein Sigma-Ergebnis enthält.

8. Gerät nach Anspruch 7, welches außerdem eine Referenzelektrode umfasst, die dem Probenfluid ausgesetzt wird.

9. Gerät nach Anspruch 7 oder 8, wobei der besagte chemische Titrator ein Edelmetall, vorzugsweise Platin, Gold oder Silber, enthält.

10. Gerät nach einem der Ansprüche 7 bis 9, wobei das Rückmeldungsmittel einen Filter, vorzugsweise einen Tiefpassfilter, umfasst.

11. Gerät nach einem der Ansprüche 7 bis 10, welches außerdem eine an den Titrator gekoppelte Pulsweitenmodulationssteuerung (PWM) umfasst, wobei die Steuerung den Delta-Rückmeldungswert als ein zu modulierendes Signal empfängt.

12. Gerät nach Anspruch 11, wobei die besagte PWM-Steuerung im Delta-Modus betrieben wird, um die erforderliche Menge an Ionen zu titrieren.

13. Gerät nach einem der Ansprüche 7 bis 12, welches außerdem ein Mittel für die Berechnung der gesamten Ladung umfasst, die an den Titrator bereitgestellt wird.

14. Gerät nach einem der Ansprüche 7 bis 13, wobei der chemische Sensor ein ionensensitiver Feldeffekttransistor ist.

## Revendications

1. Procédé de mesure d'une production d'ions au sein d'un échantillon de fluide, due à une réaction chimique, le procédé s'appuyant sur une modulation sigma delta et comprenant les étapes consistant à :

   exposer un capteur chimique à l'échantillon afin de fournir un signal de sortie électrique représentant une concentration en ions au sein de l'échantillon ;
   calculer, à partir dudit signal de sortie électrique, une valeur de rétroaction delta représentant une vitesse de modification de la concentration en ions de l'échantillon ;
   fournir la valeur de rétroaction delta à un titrateur exposé à l'échantillon afin de libérer ou absorber une quantité d'ions par rapport à l'échantillon de fluide, grâce à quoi le modulateur sigma est établi par le profil de concentration en ions de l'échantillon du fluide, et
   déduire un résultat de production d'ions à partir dudit signal de sortie électrique.

2. Procédé selon la revendication 1, dans lequel les étapes du procédé sont répétées à intervalles réguliers, lesdits intervalles étant de manière préférée inférieurs à 20 secondes, inférieurs à 10 secondes ou inférieurs à 6 secondes.

3. Procédé selon la revendication 1 ou 2, dans lequel la quantité d'ions à libérer ou à absorber est calculée de manière à maintenir une concentration essentiellement constante desdits ions.

**4.** Procédé selon la revendication 1, 2 ou 3, dans lequel l'échantillon subit une réaction qui libère ou absorbe lesdits ions.

**5.** Procédé selon l'une quelconque des revendications 1 à 4, comprenant en outre une étape consistant à fournir un signal de mesure de pH couplé au capteur chimique, de manière préférée via un filtre passe-bas.

**6.** Procédé selon l'une quelconque des revendications précédentes, dans lequel l'étape de calcul d'une valeur de rétroaction comprend une étape consistant à sur-échantillonner le signal de sortie électrique représentant une concentration en ions afin de fournir une mise en forme de bruit.

**7.** Dispositif permettant de mesurer une production d'ions au sein d'un échantillon de fluide, due à une réaction chimique, et qui est configuré pour utiliser une modulation sigma delta, le dispositif comprenant un capteur chimique et un titrateur chimique exposé à l'échantillon, dans lequel un signal de sortie électrique en provenance du capteur chimique, représentant une concentration en ions au sein de l'échantillon, est couplé au titrateur avec un moyen de rétroaction, le moyen de rétroaction étant agencé de manière à calculer une valeur de rétroaction delta représentant une vitesse de modification d'une concentration en ions de l'échantillon, et fournir ladite valeur de rétroaction delta audit titrateur, dans lequel, en cours d'utilisation, l'échantillon de fluide contient un résultat sigma.

**8.** Dispositif selon la revendication 7, comprenant en outre une électrode de référence exposée à l'échantillon de fluide.

**9.** Dispositif selon la revendication 7 ou 8, dans lequel ledit titrateur chimique comprend un métal précieux, de manière préférée du platine, de l'or ou de l'argent.

**10.** Dispositif selon l'une quelconque des revendications 7 à 9, dans lequel le moyen de rétroaction comprend un filtre, de manière préférée un filtre passe-bas.

**11.** Dispositif selon l'une quelconque des revendications 7 à 10, comprenant en outre un dispositif de commande à modulation de largeur d'impulsion (MLI) couplé au titrateur, ledit dispositif de commande recevant la valeur de rétroaction delta sous forme de signal à moduler.

**12.** Dispositif selon la revendication 11, dans lequel ledit dispositif de commande MLI fonctionne en mode delta pour titrer la quantité requise d'ions.

**13.** Dispositif selon l'une quelconque des revendications 7 à 12, comprenant en outre un moyen de calcul de la charge totale fournie au titrateur.

**14.** Dispositif selon l'une quelconque des revendications 7 à 13, dans lequel le capteur chimique est un transistor à effet de champ sensible aux ions.

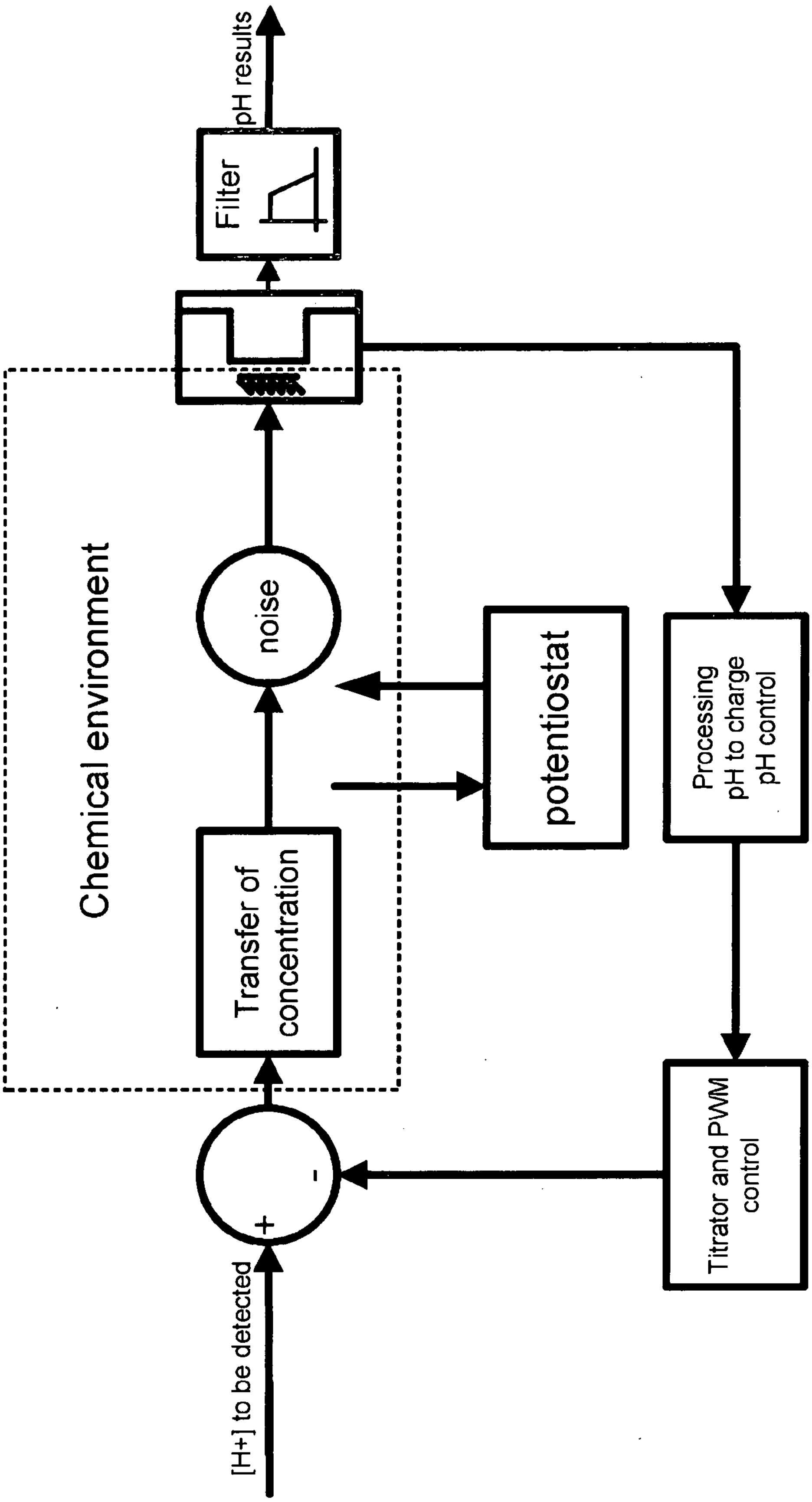
[H+] to be detected
+
-
Chemical environment
Transfer of concentration
noise
potentiostat
Filter
pH results
Processing
pH to charge
pH control
Titrator and PWM
control

Figure 1

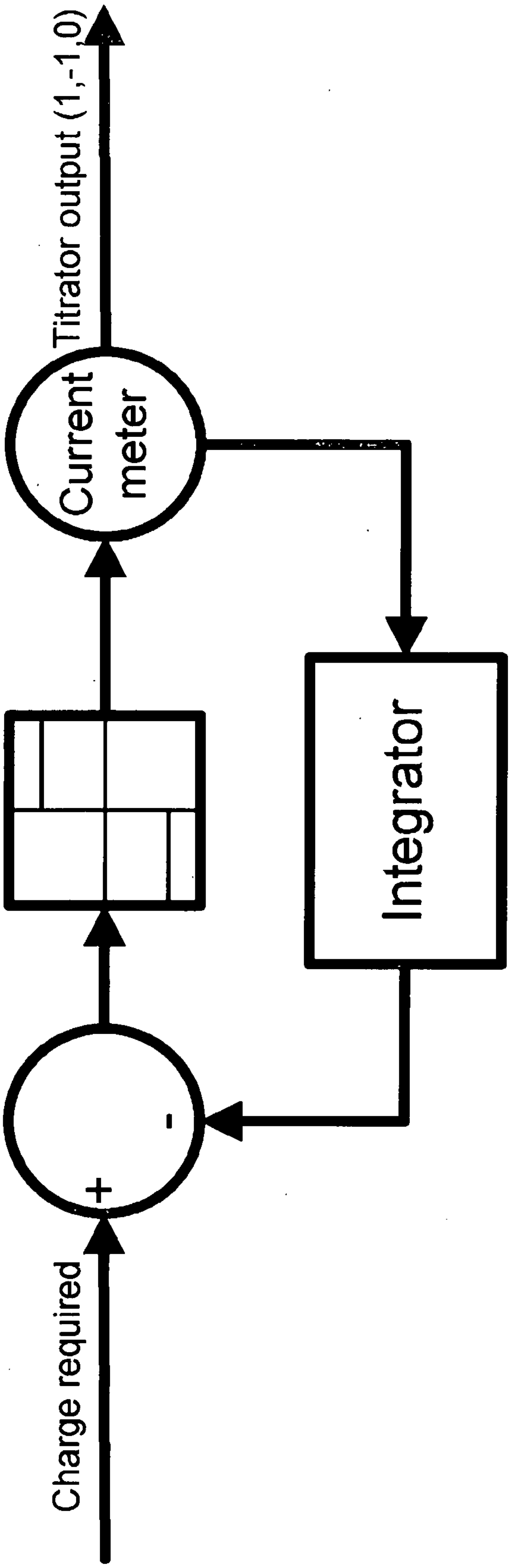
Charge required
+
-
Current
meter
Titrator output (1,-1,0)
Integrator

Figure 2

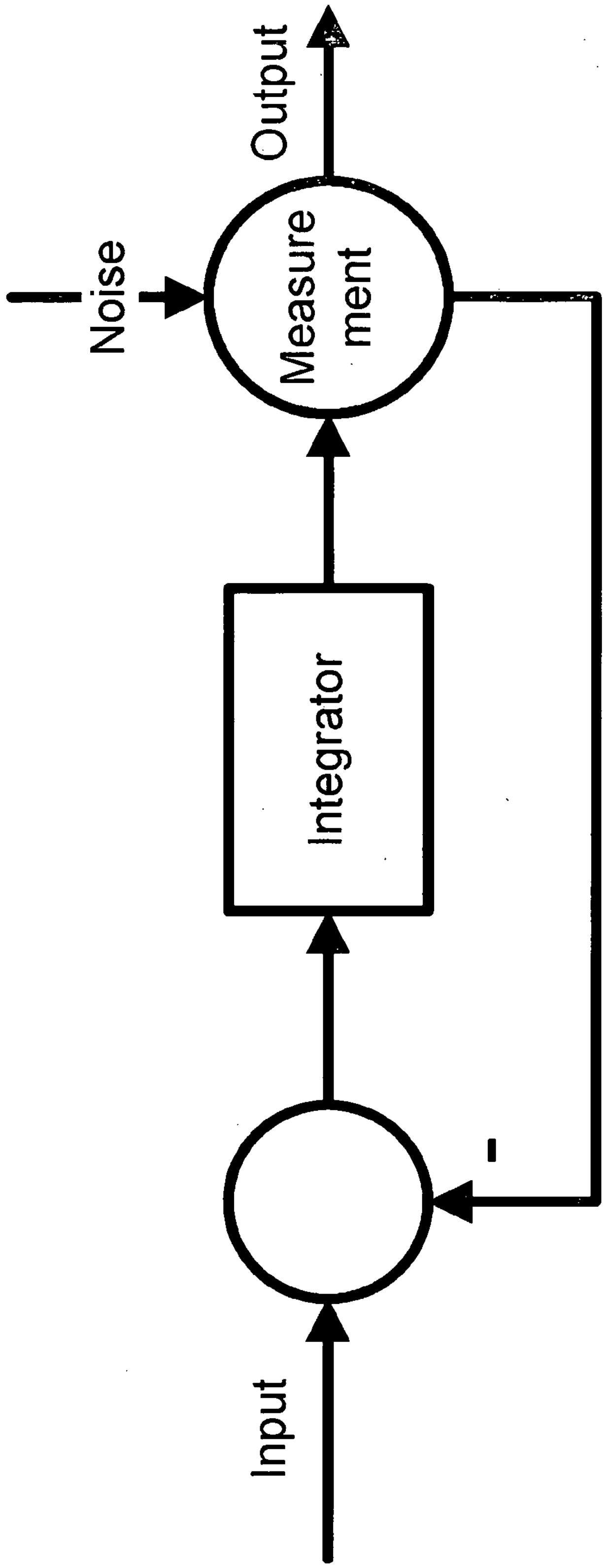


Figure 3

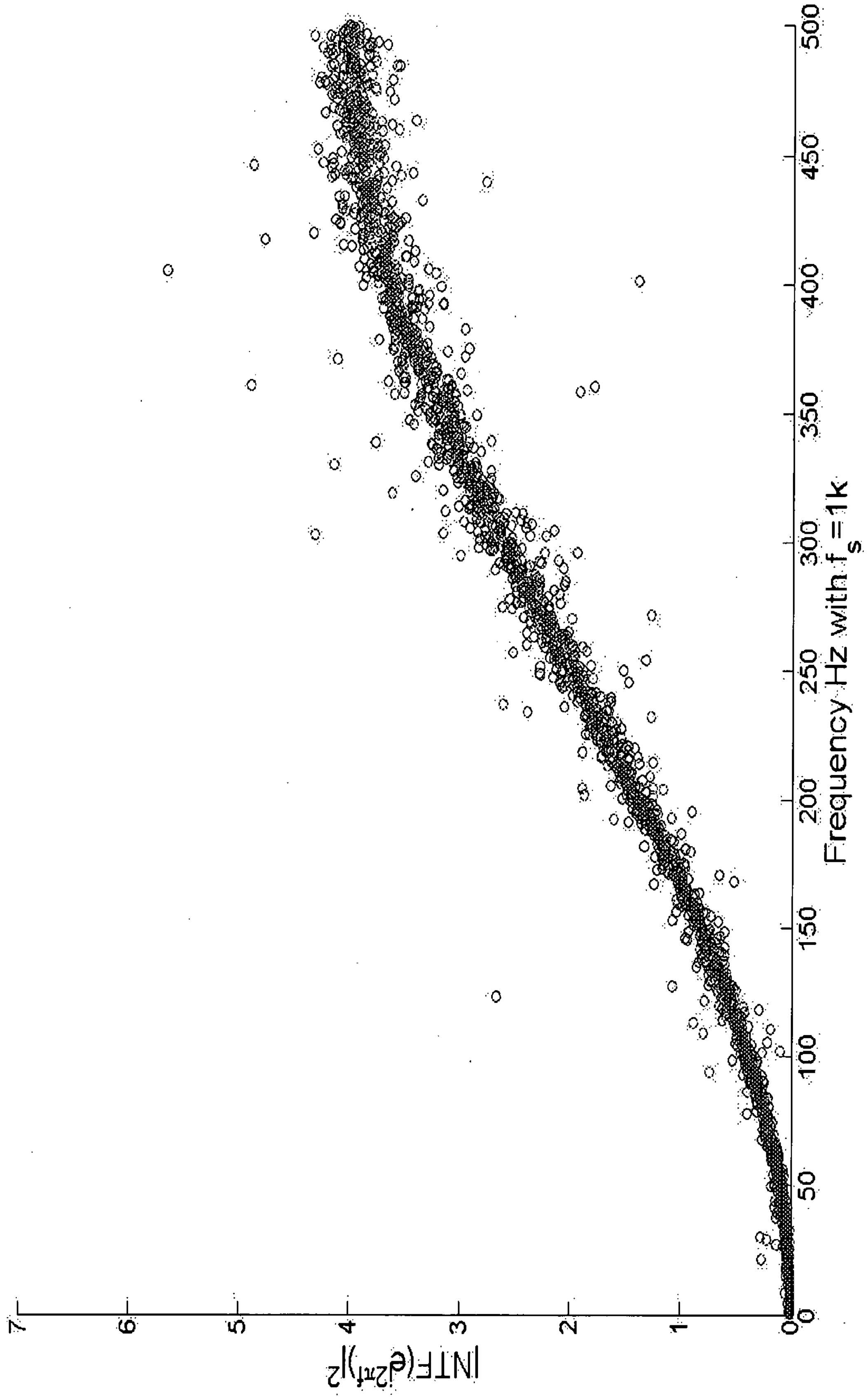

$|NTF(e^{j2\pi f})|^2$
0
1
2
3
4
5
6
7
0
50
100
150
200
250
300
350
400
450
500
Frequency Hz with $f_s$=1k


**Figure 4**

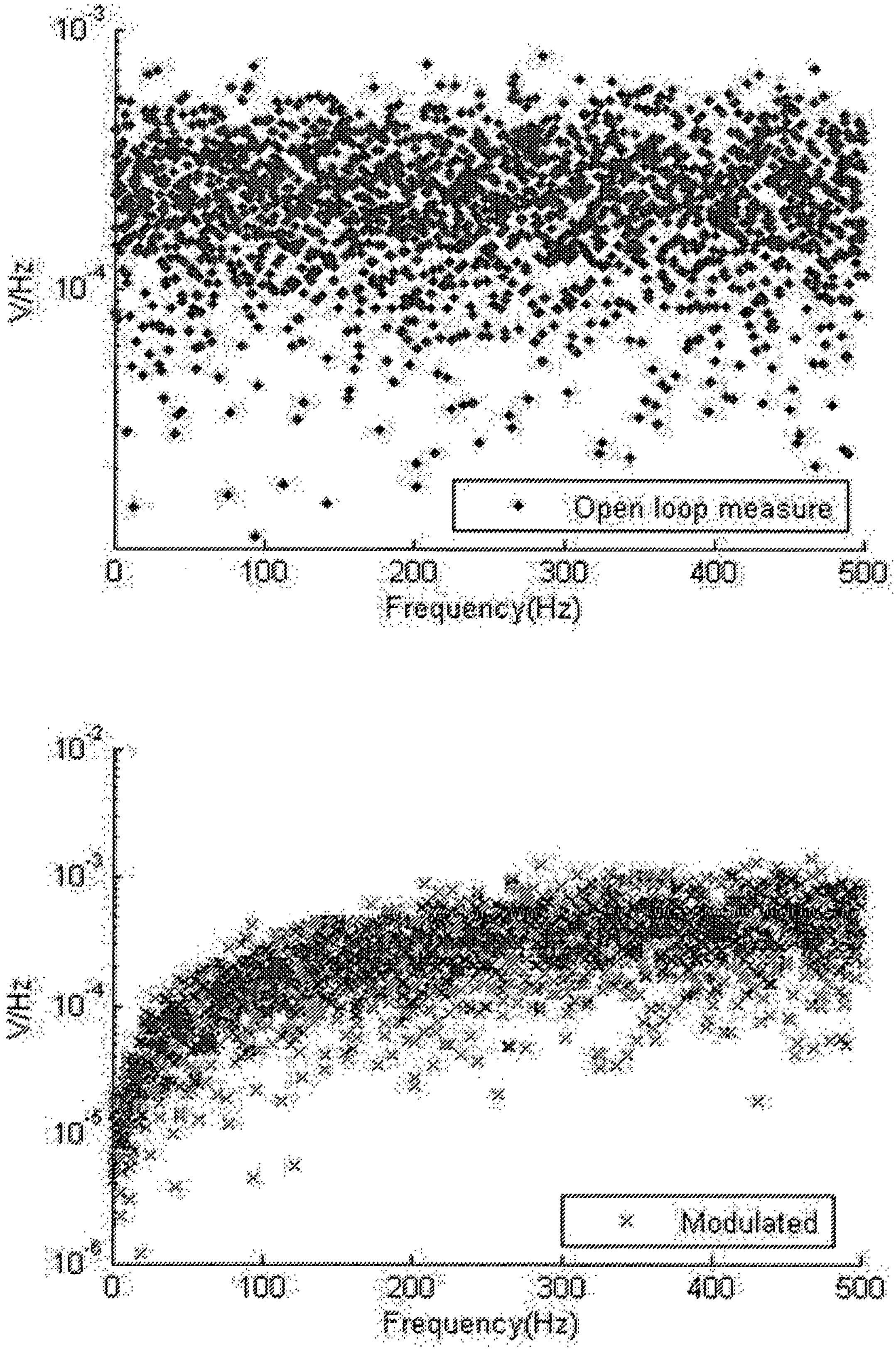
10^-3
10^-4
V/Hz
Open loop measure
0
100
200
300
400
500
Frequency(Hz)
10^-2
10^-3
10^-4
10^-5
10^-6
V/Hz
Modulated
0
100
200
300
400
500
Frequency(Hz)

Figure 5

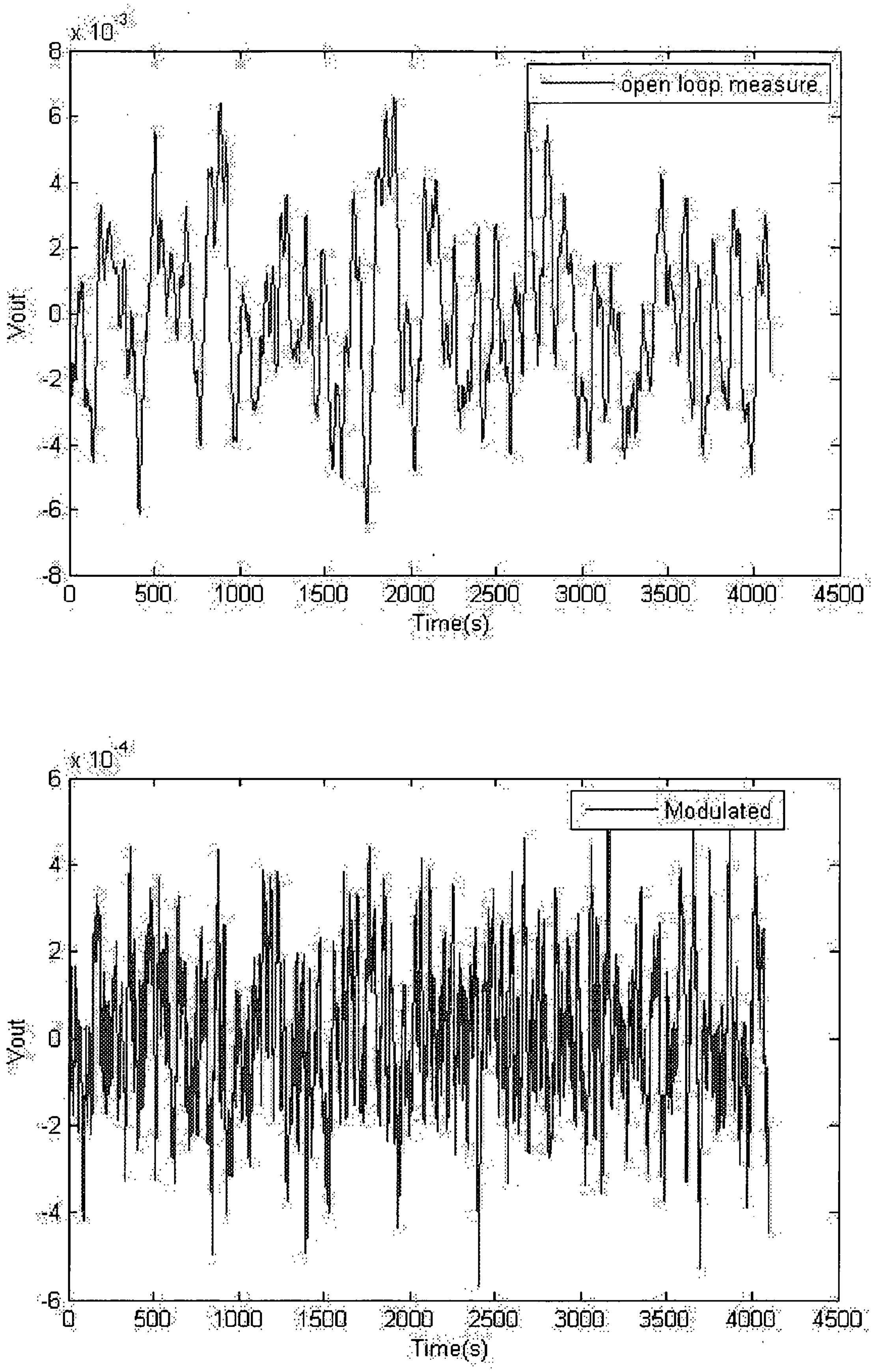
x 10-3
open loop measure
Vout
Time(s)
x 10-4
Modulated
Vout
Time(s)

Figure 6

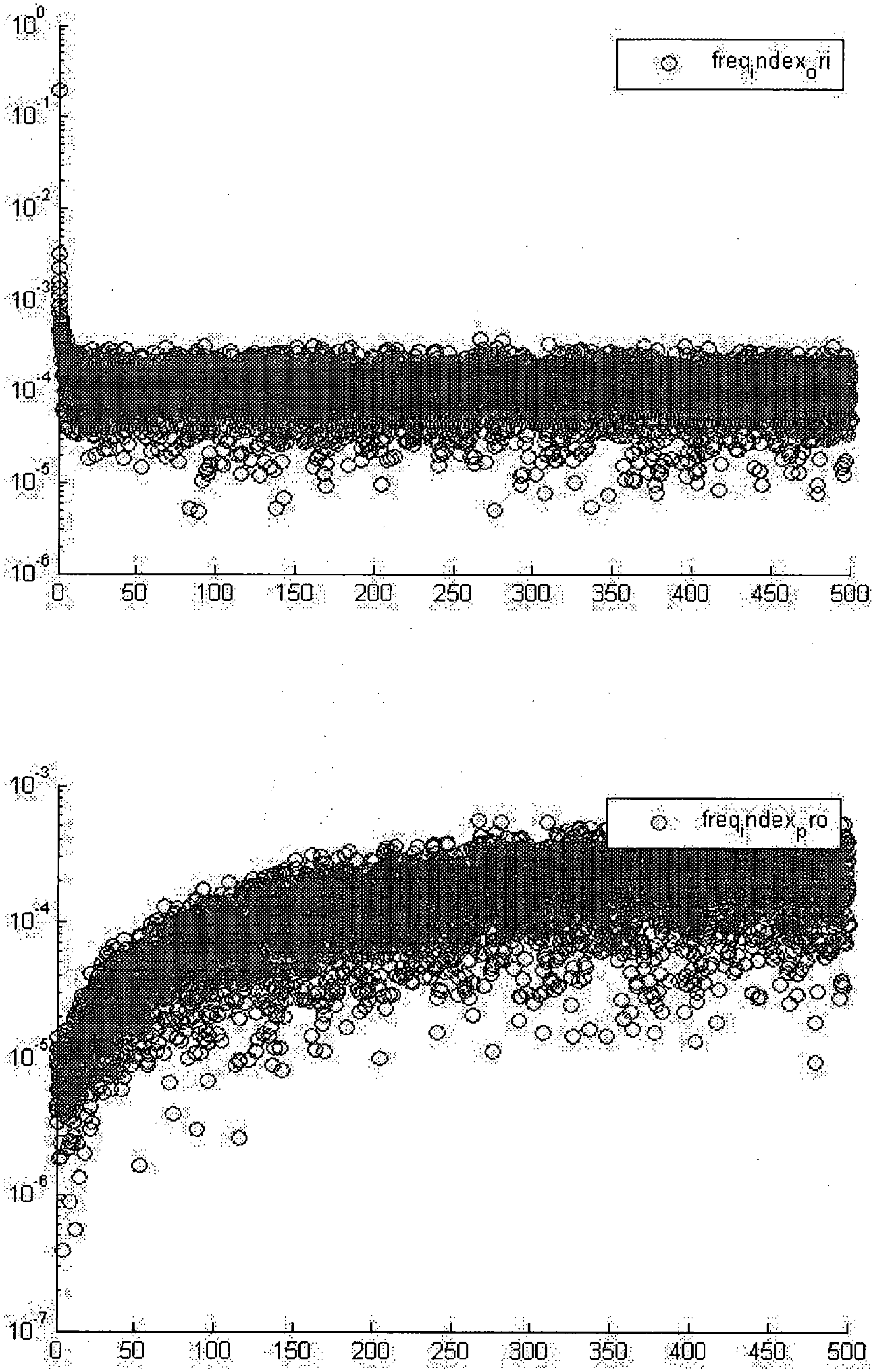
$freq_{i}ndex_{o}ri$
$10^{0}$
$10^{-1}$
$10^{-2}$
$10^{-3}$
$10^{-4}$
$10^{-5}$
$10^{-6}$
0 50 100 150 200 250 300 350 400 450 500
$freq_{i}ndex_{p}ro$
$10^{-3}$
$10^{-4}$
$10^{-5}$
$10^{-6}$
$10^{-7}$
0 50 100 150 200 250 300 350 400 450 500

Figure 7

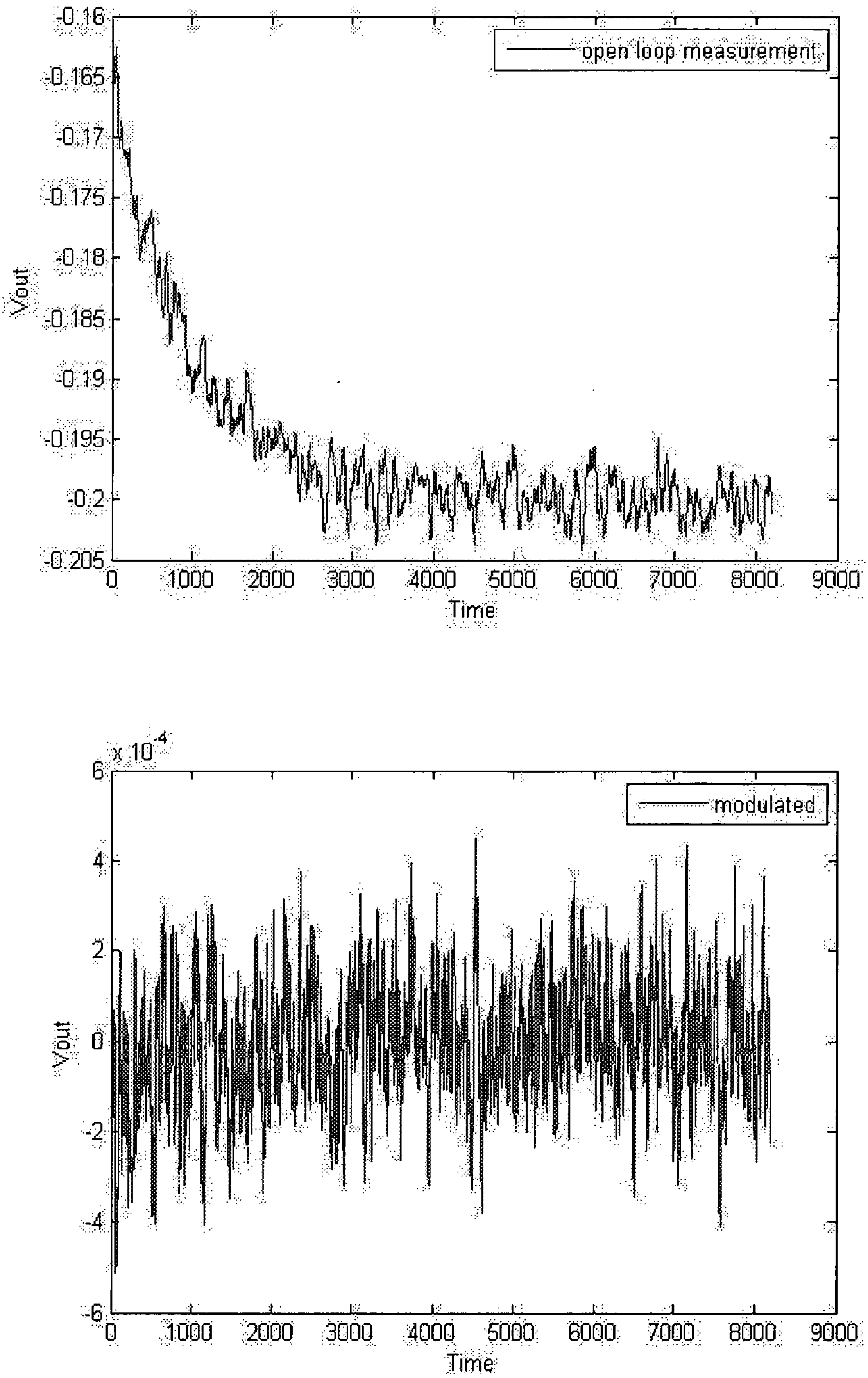
open loop measurement
Vout
Time
-0.16
-0.165
-0.17
-0.175
-0.18
-0.185
-0.19
-0.195
-0.2
-0.205
0
1000
2000
3000
4000
5000
6000
7000
8000
9000
modulated
x 10^-4
6
4
2
0
-2
-4
-6

Figure 8

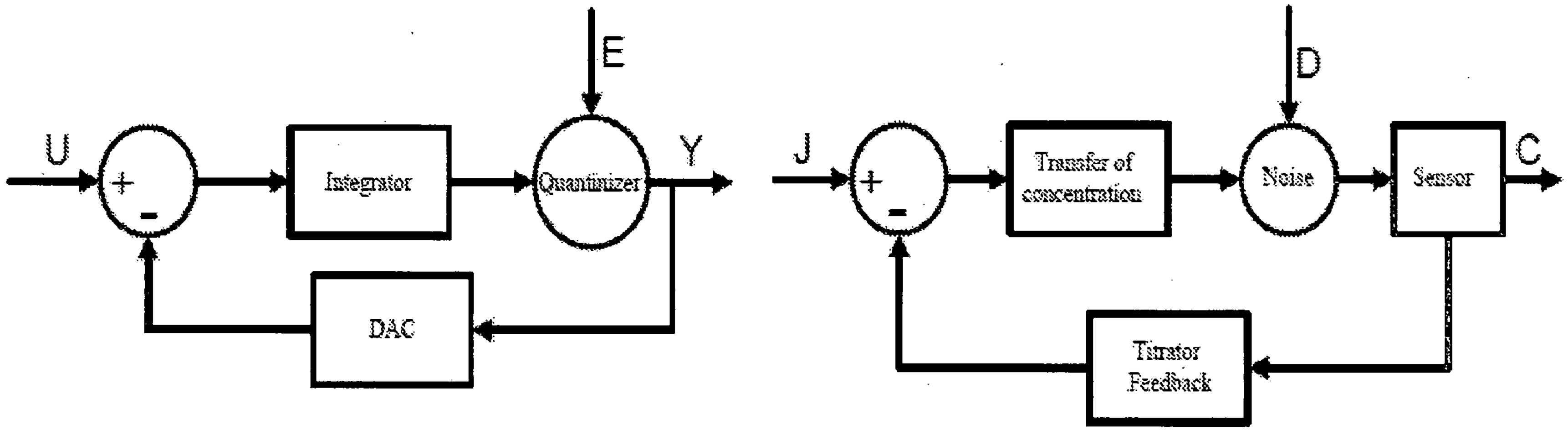


| | Electrical Sigma-Delta | Chemical Sigma-Delta |
|---|---|---|
| Components | | |
| Transducer | Digital | Chemical sensors (ISFETS) |
| Integrator | LPF | Ion diffusion/accumulation |
| Negative feedback | Sigma modulator by DAC | Titrator/transducer |
| Variables | | |
| Input | Analogue voltage(V) | Chemical ion change |
| Output | Digital (1/0) | Electrical signal |
| In-Loop Noise | Quantization noise | Drift/in loop noise |

Figure 9

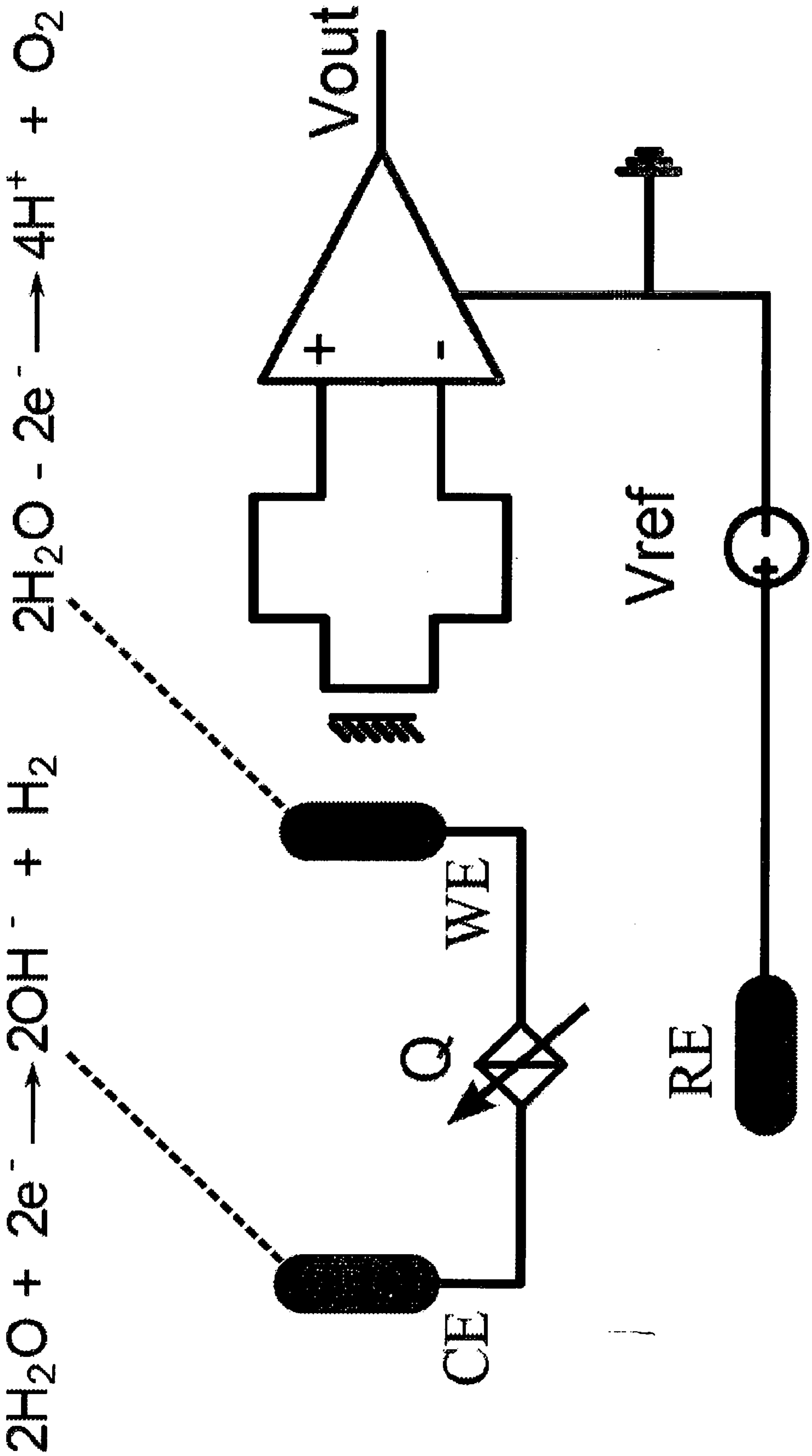
$2H_2O + 2e^- \longrightarrow 2OH^- + H_2$
$2H_2O - 2e^- \longrightarrow 4H^+ + O_2$
Vout
Vref
WE
CE
RE
Q

Figure 10

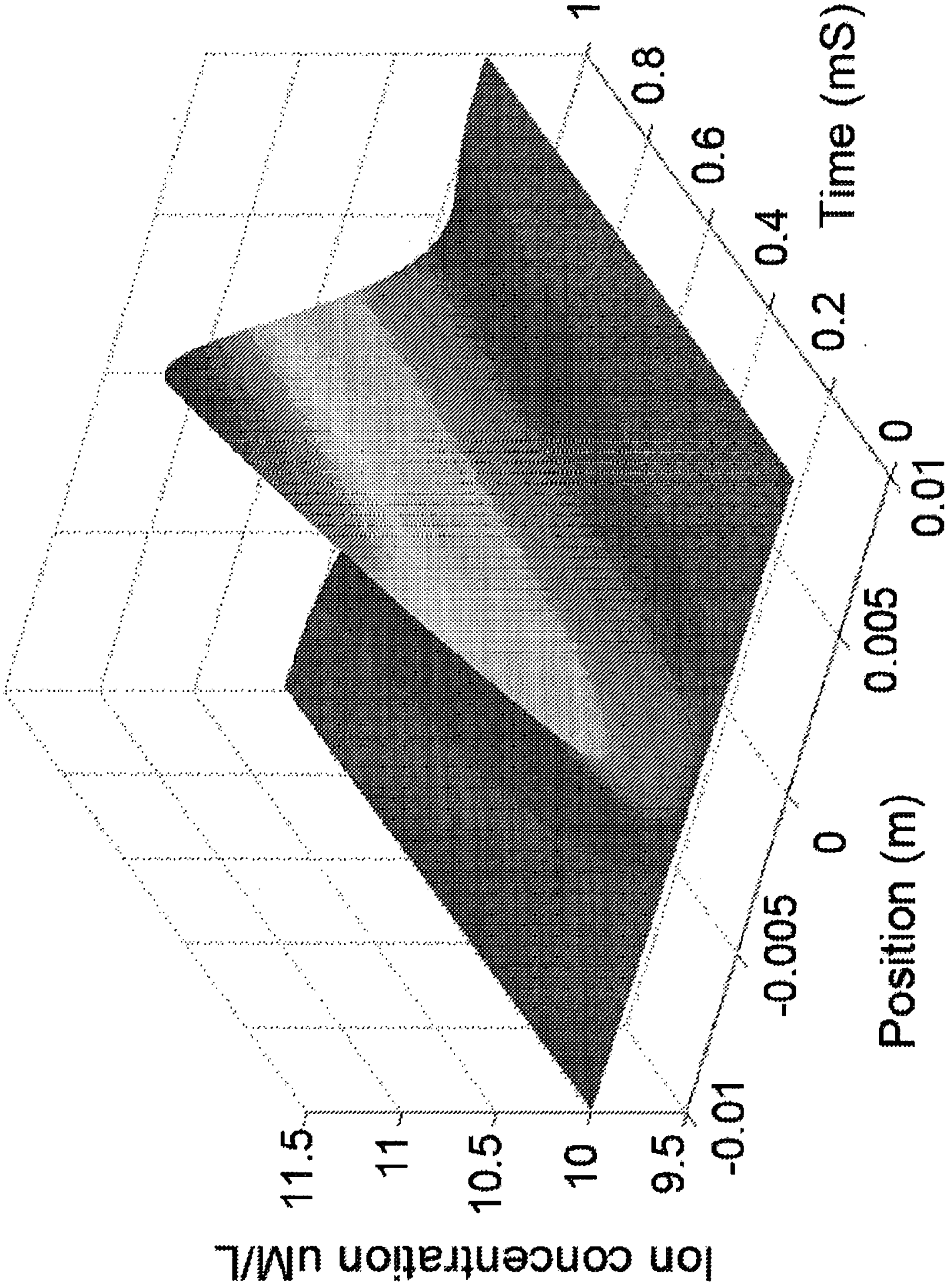
Ion concentration uM/L
11.5
11
10.5
10
9.5
-0.01
-0.005
0
0.005
0.01
Position (m)
0
0.2
0.4
0.6
0.8
1
Time (mS)

Figure 11

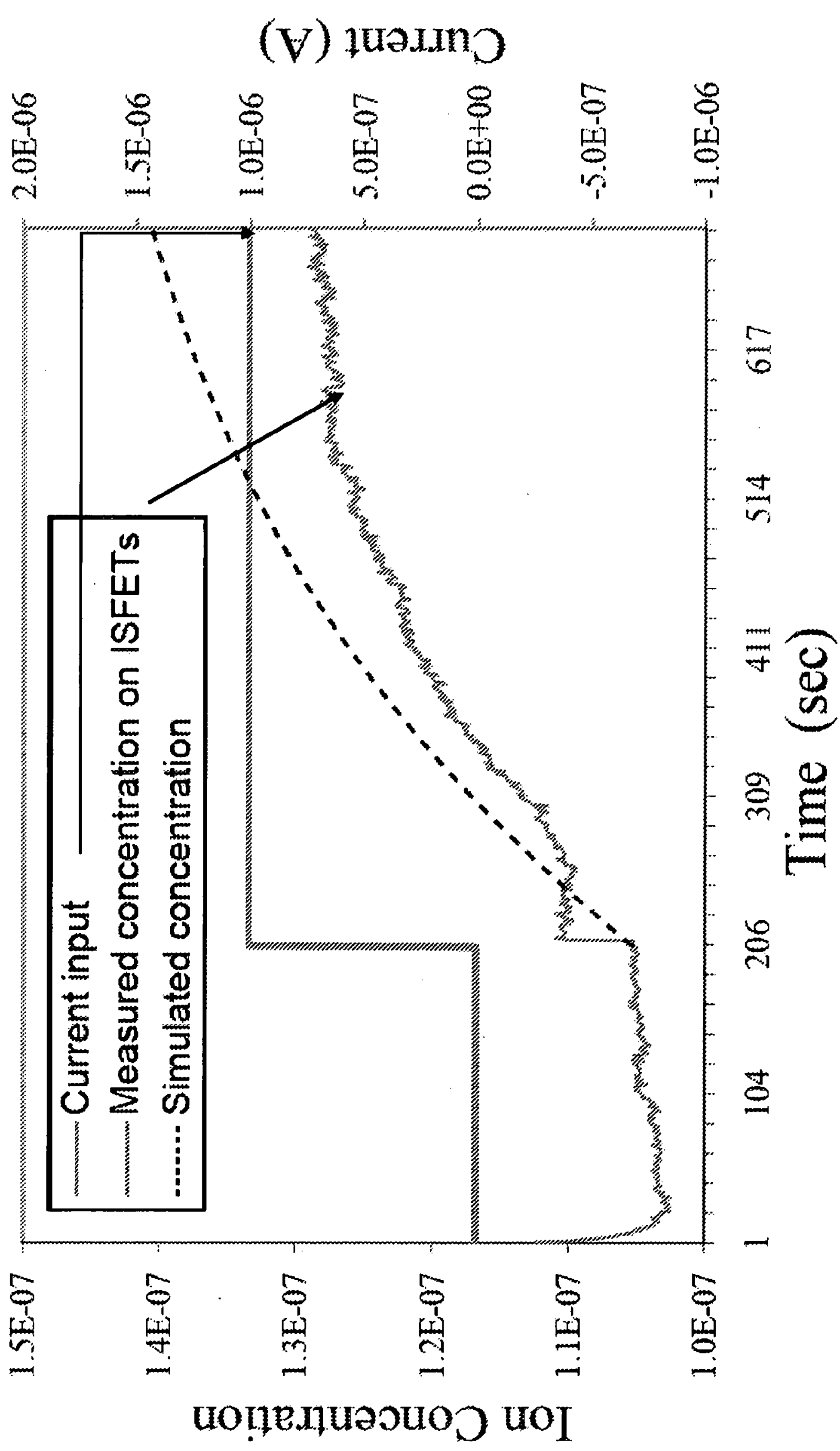
Current (A)
2.0E-06
1.5E-06
1.0E-06
5.0E-07
0.0E+00
-5.0E-07
-1.0E-06
Current input
Measured concentration on ISFETs
Simulated concentration
1.5E-07
1.4E-07
1.3E-07
1.2E-07
1.1E-07
1.0E-07
Ion Concentration
1
104
206
309
411
514
617
Time (sec)

Figure 12

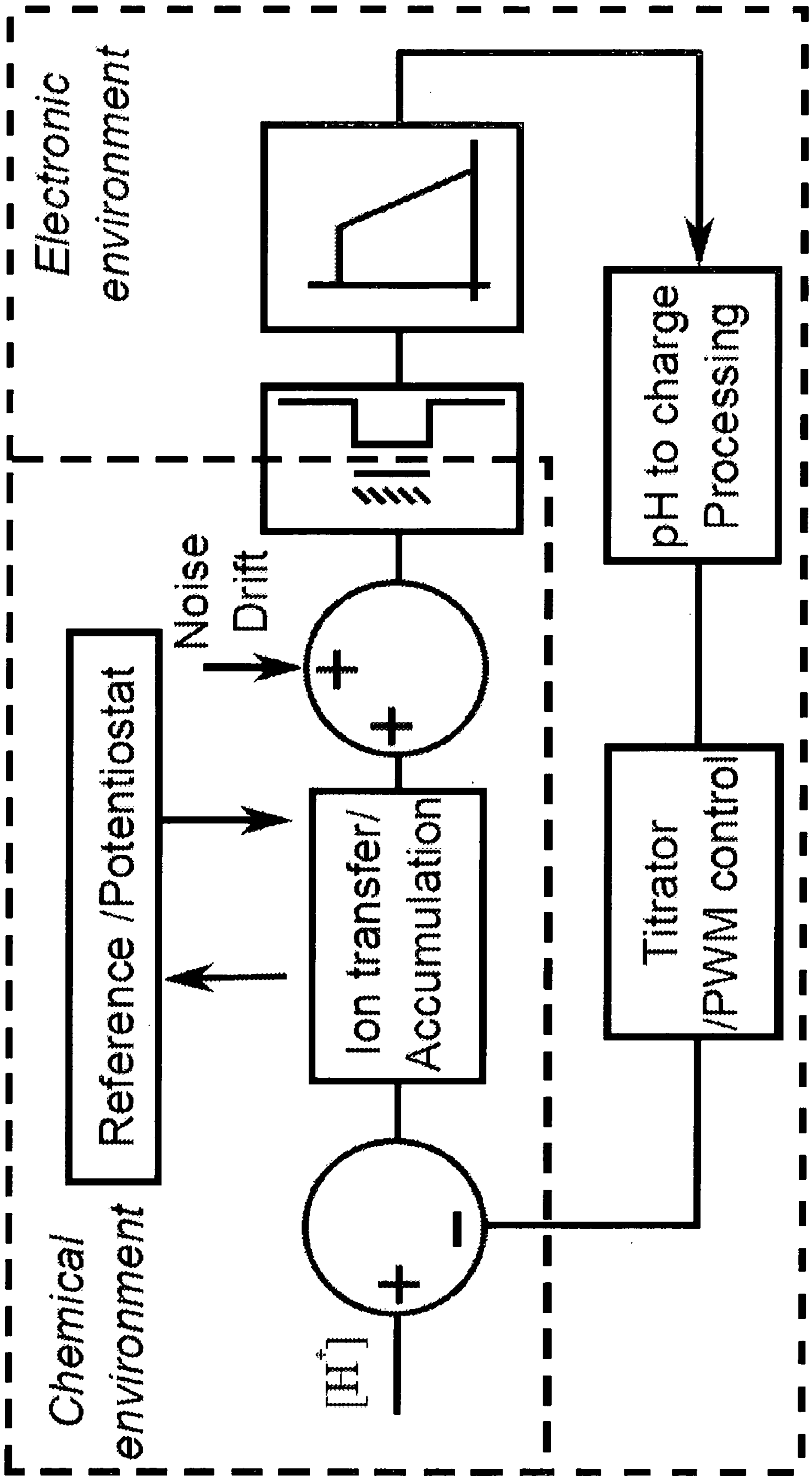
Electronic environment
Chemical environment
Reference /Potentiostat
Noise
Drift
[H+]
Ion transfer/ Accumulation
pH to charge Processing
Titrator /PWM control

Figure 13

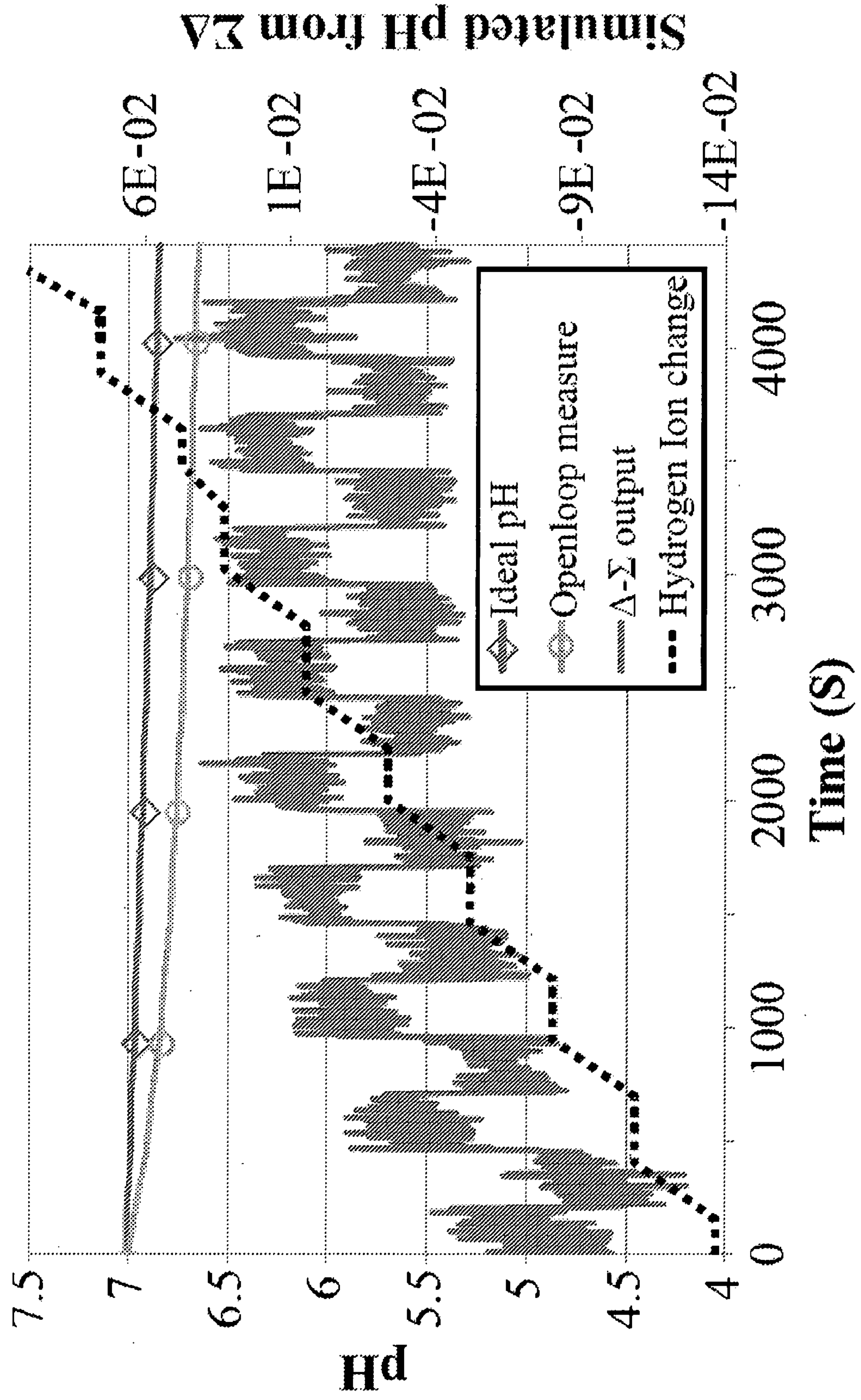
Simulated pH from ΣΔ
pH
7.5
7
6.5
6
5.5
5
4.5
4
6E-02
1E-02
-4E-02
-9E-02
-14E-02
0
1000
2000
3000
4000
Time (S)
Ideal pH
Openloop measure
Δ-Σ output
Hydrogen Ion change

Figure 14

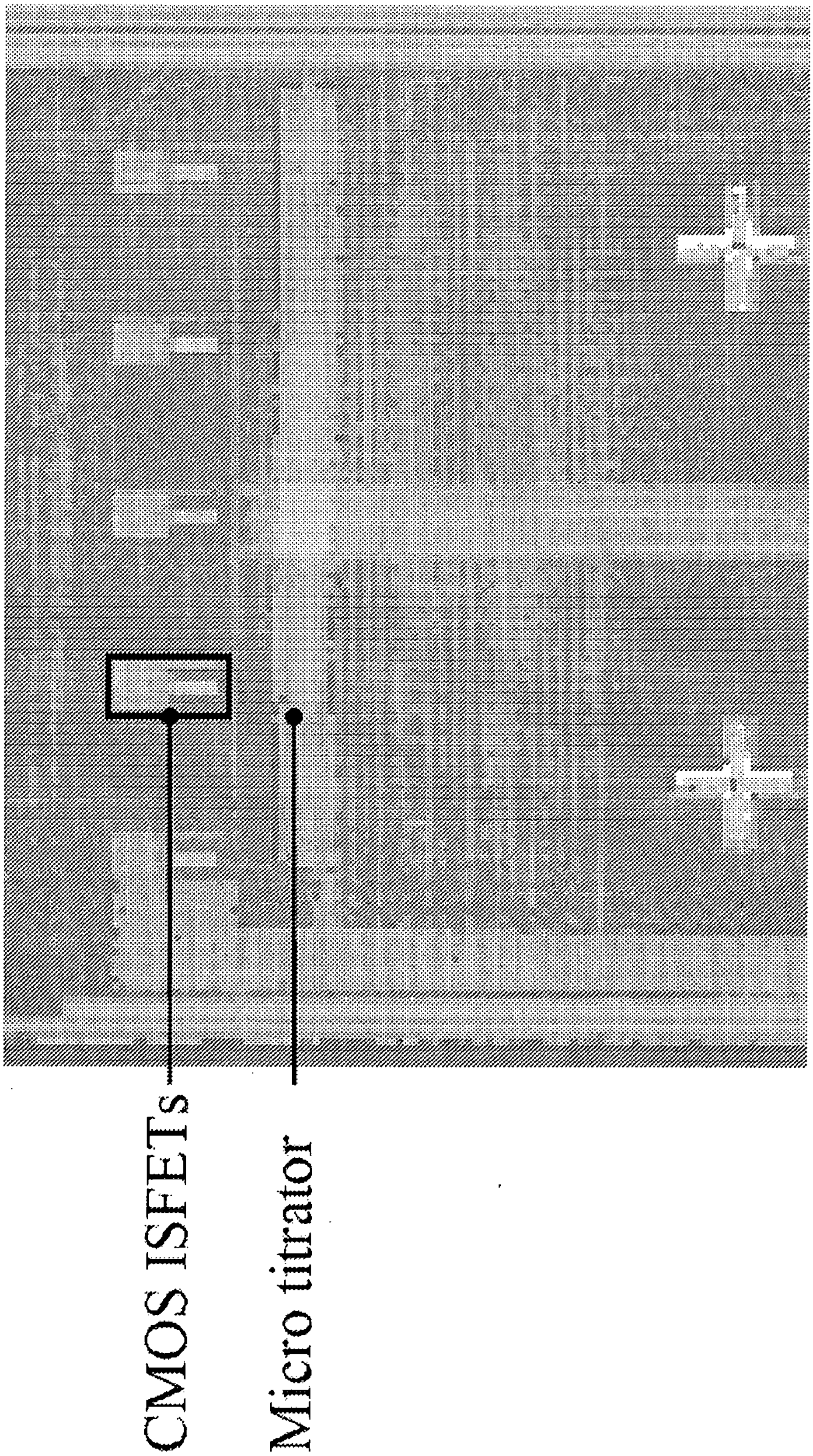


Figure 15

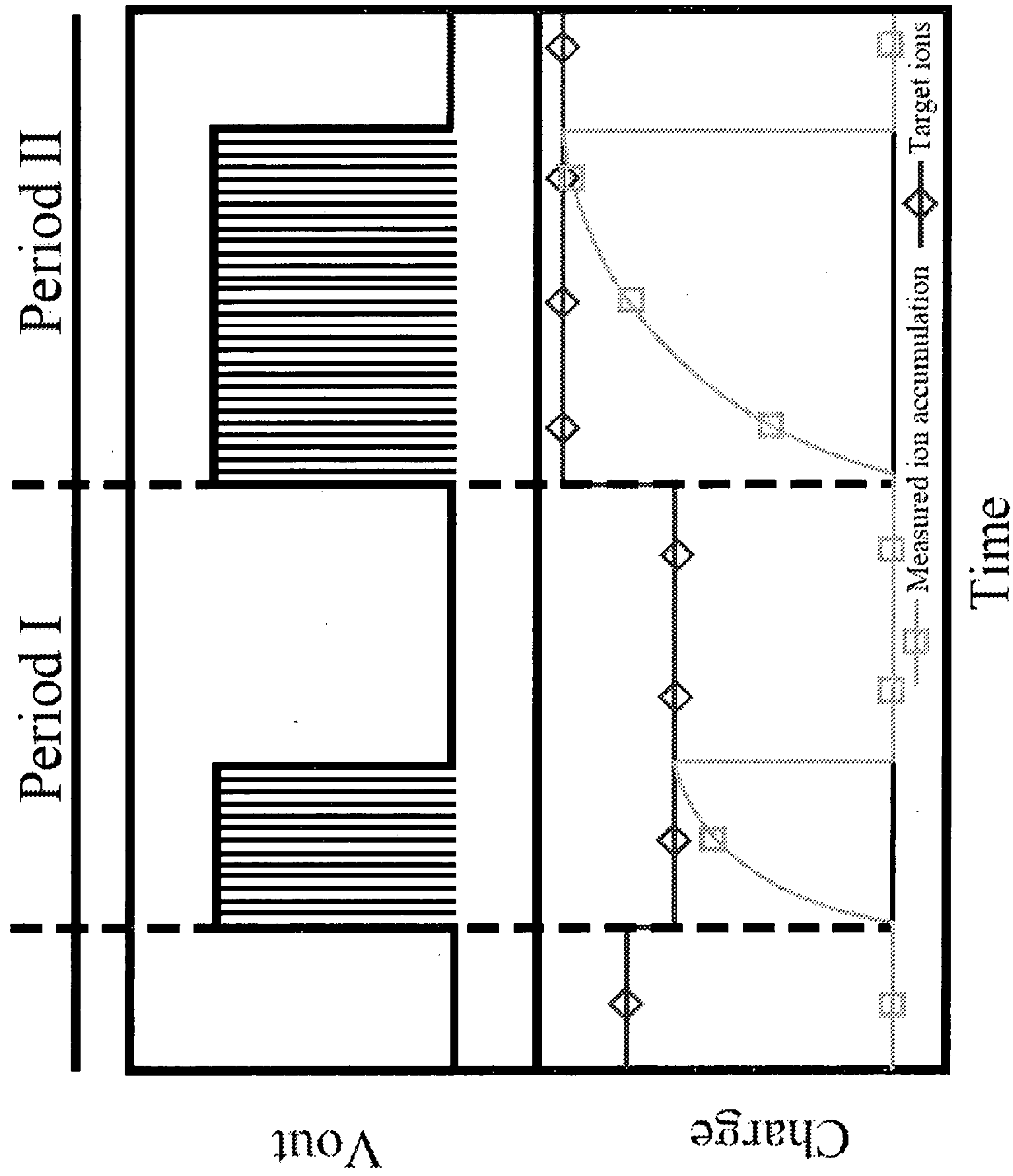
Period I
Period II
Vout
Charge
Time
Measured ion accumulation
Target ions

Figure 16

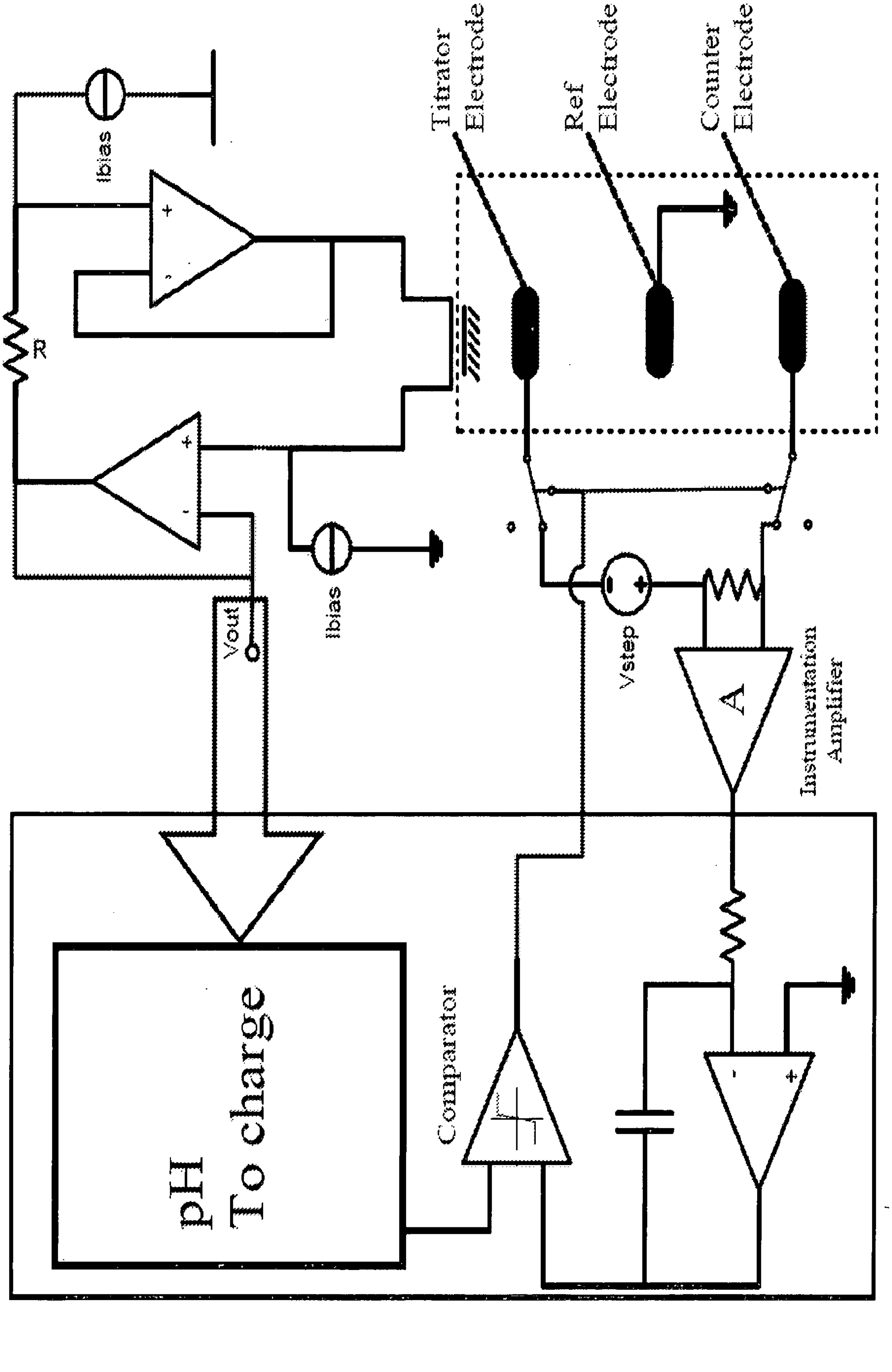
Ibias
R
Vout
Ibias
Titrator Electrode
Ref Electrode
Counter Electrode
Vstep
A
Instrumentation Amplifier
Comparator
pH
To charge

Figure 17

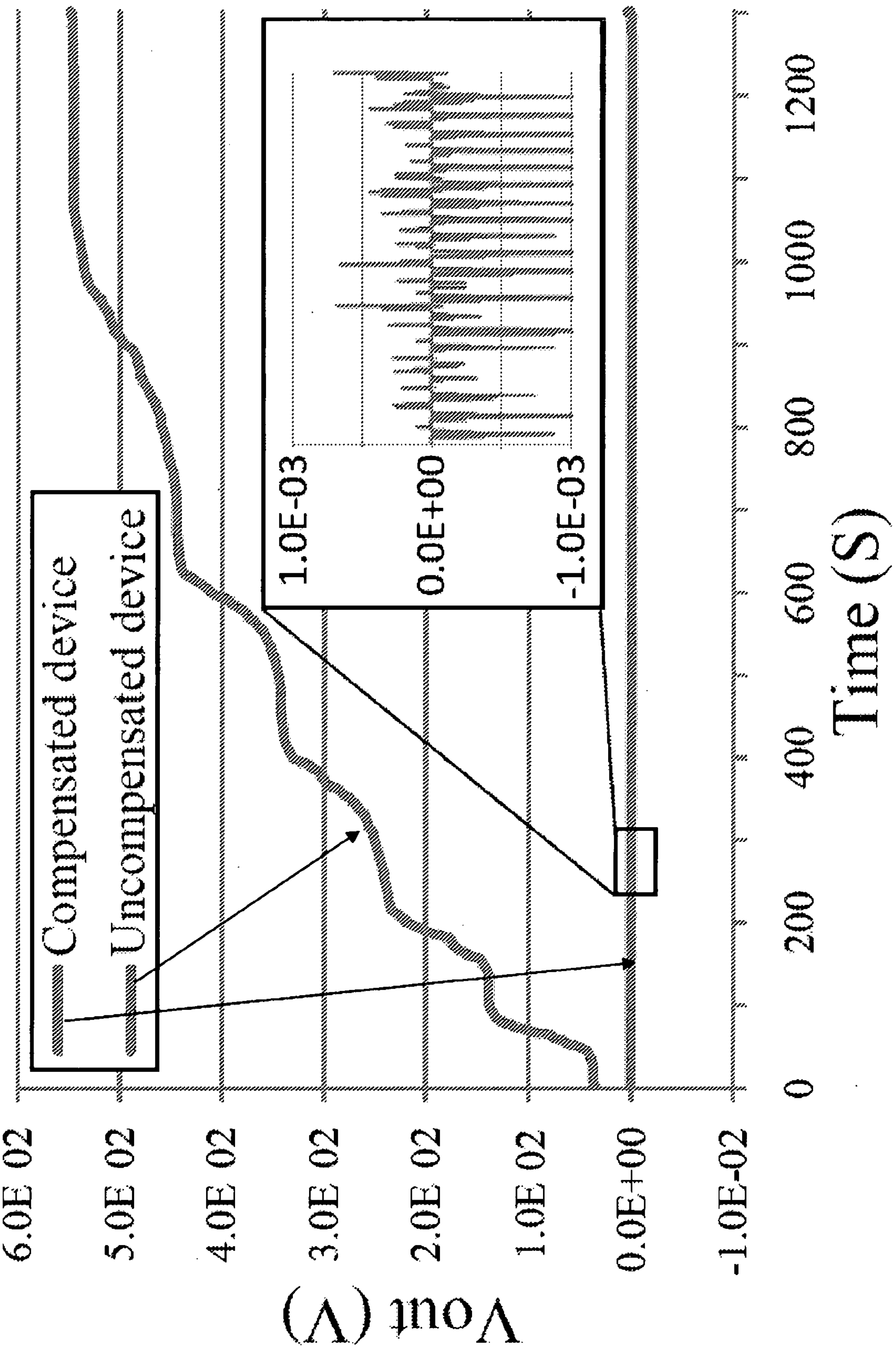
Compensated device
Uncompensated device
Vout (V)
6.0E 02
5.0E 02
4.0E 02
3.0E 02
2.0E 02
1.0E 02
0.0E+00
-1.0E-02
1.0E-03
0.0E+00
-1.0E-03
0
200
400
600
800
1000
1200
Time (S)

Figure 18

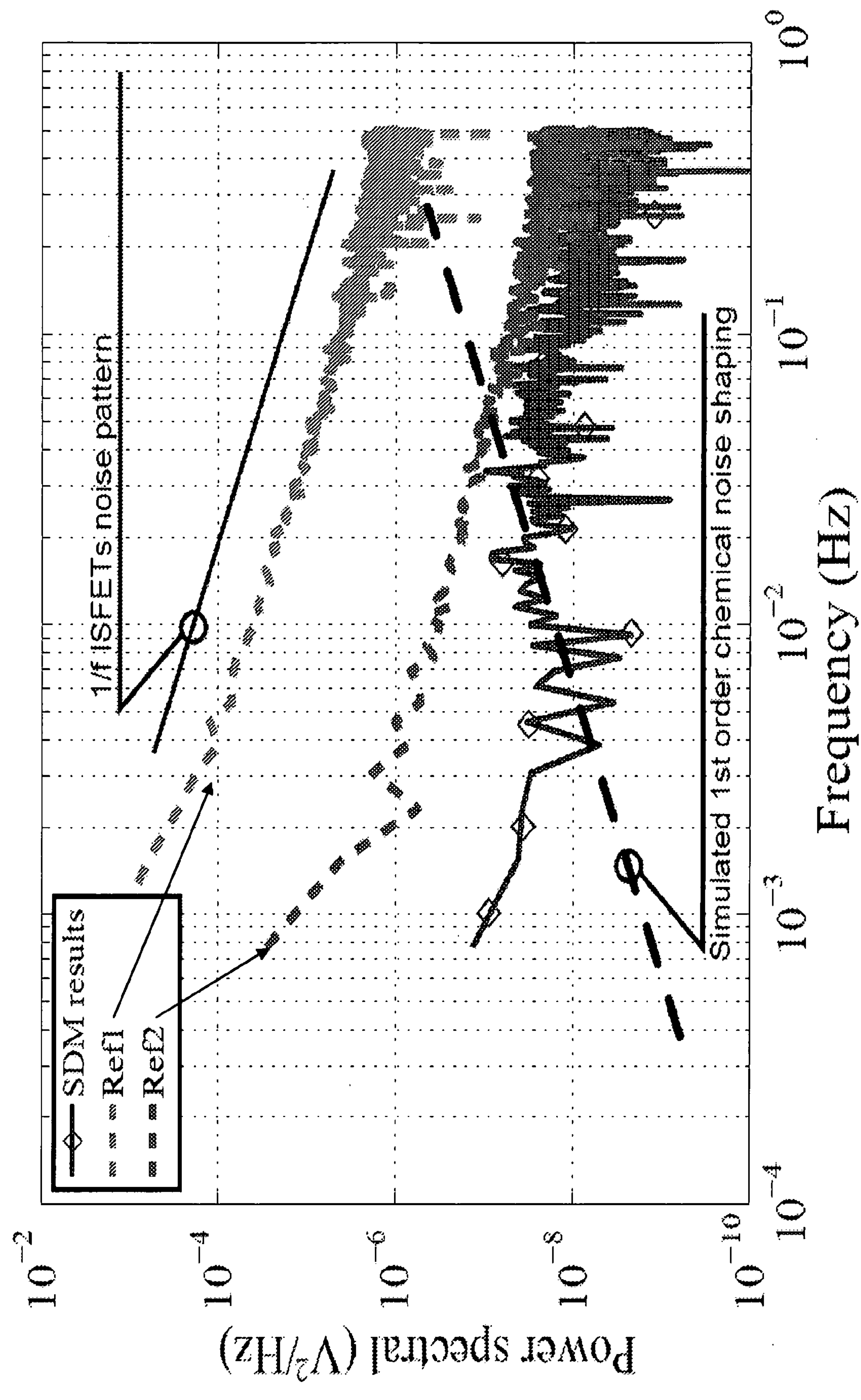
SDM results
Ref1
Ref2
1/f ISFETs noise pattern
Simulated 1st order chemical noise shaping
Frequency (Hz)
Power spectral (V²/Hz)
10^-4
10^-3
10^-2
10^-1
10^0
10^-2
10^-4
10^-6
10^-8
10^-10

Figure 19

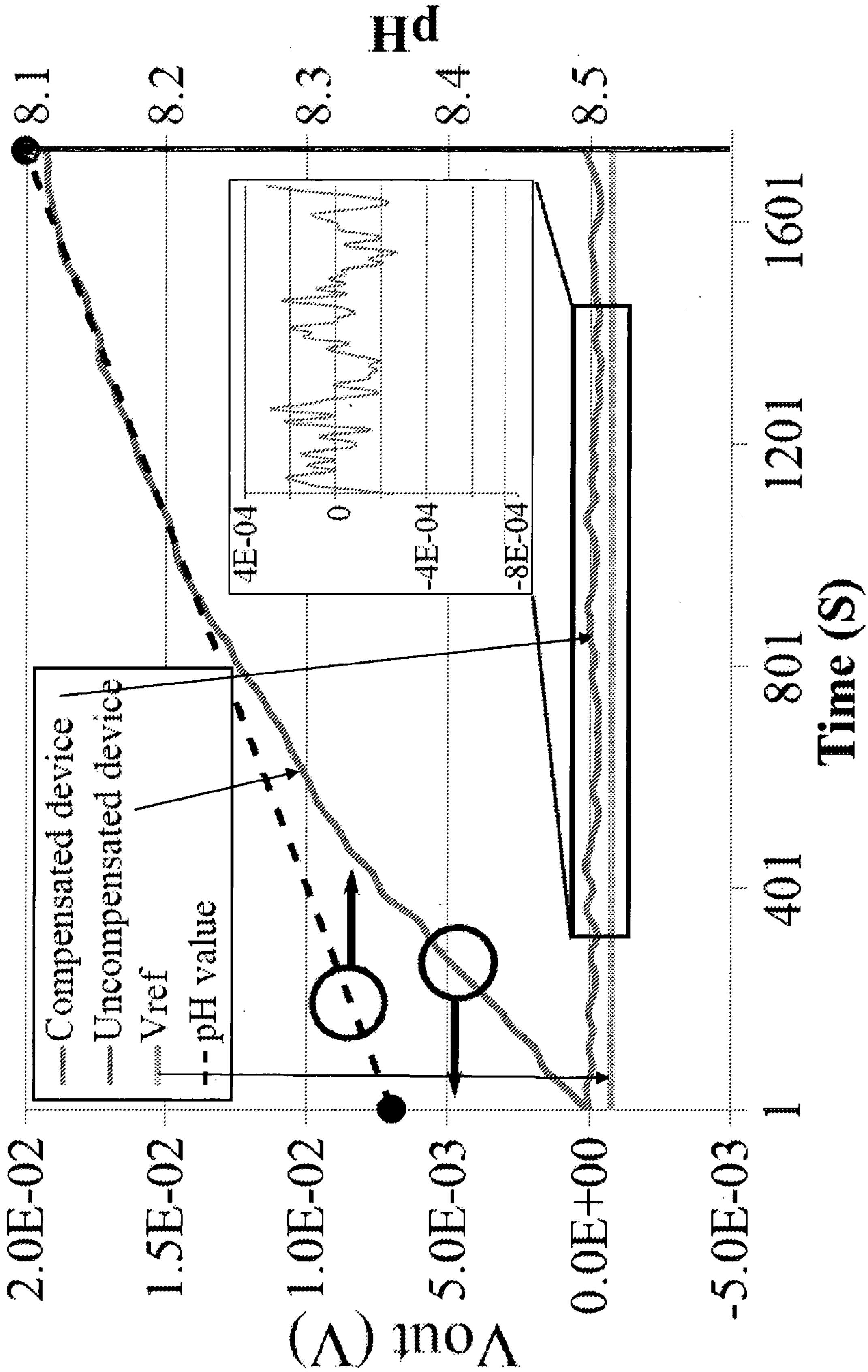

Vout (V)
2.0E-02
1.5E-02
1.0E-02
5.0E-03
0.0E+00
-5.0E-03
pH
8.1
8.2
8.3
8.4
8.5
Time (S)
1
401
801
1201
1601
Compensated device
Uncompensated device
Vref
pH value
4E-04
0
-4E-04
-8E-04


Figure 20

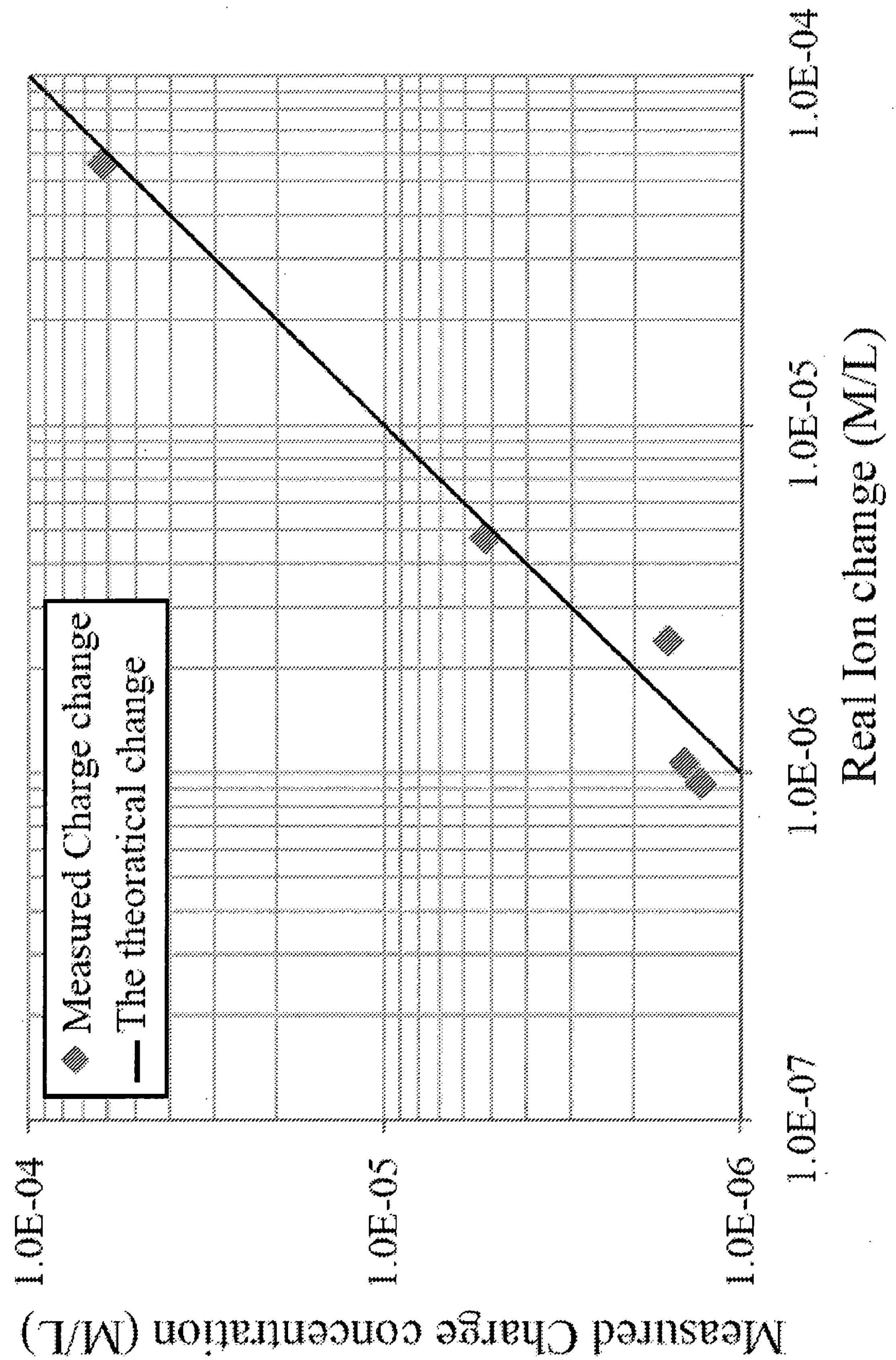
Measured Charge change
The theoratical change
Measured Charge concentration (M/L)
1.0E-04
1.0E-05
1.0E-06
Real Ion change (M/L)
1.0E-07
1.0E-06
1.0E-05
1.0E-04

**Figure 21**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **BART H. VAN DER SCHOOT et al.** The pH-static enzyme sensor: An ISFET-based enzyme sensor, insensitive to the buffer capacity of the sample. *Analytica Chimica Acta,* 01 January 1987, vol. 199, 157-160